# EUROPEAN PATENT APPLICATION

(11) **EP 1 958 993 A1**
(43) Date of publication of application: **20.08.2008**
(21) Application number: 08150829.3
(22) Date of filing: 30.01.2008
(51) Int. Cl.: C09D 11/00, C09B 11/00, C09B 69/00

(54) **Phase change inks containing colorant compounds**

(30) Priority: 06.02.2007 US 702818
(71) Applicant: Xerox Corporation, Rochester, New York 14644 (US)
(72) Inventor: Banning, Jeffrey H., Hillsboro, OR 97124 (US)
(74) Representative: Grünecker, Kinkeldey, Stockmair & Schwanhäusser Anwaltssozietät

(57) **Abstract**

A phase change ink composition including a phase change ink carrier; and a colorant compound comprising a basic dye component and a waxy counter ion comprising a waxy moiety.

## Description

Cross-reference is made to the following co-pending applications:

Co-pending Application U.S. Serial No. (not yet assigned, Attorney Docket Number 20060168-US-NP), filed concurrently herewith, entitled "Colorant Compounds," with the named inventor Jeffery H. Banning, the disclosure of which is totally incorporated herein by reference, discloses a colorant compound.

Co-pending Application U.S. Serial No. (not yet assigned, Attorney Docket Number 20060162-US-NP), filed concurrently herewith, entitled "Colorant Compounds," with the named inventor Jeffery H. Banning, the disclosure of which is totally incorporated herein by reference, discloses a phase change ink composition comprising a phase change ink carrier and a colorant compound.

Co-pending Application U.S. Serial No. (not yet assigned, Attorney Docket Number 20060162Q-US-NP), filed concurrently herewith, entitled "Phase Change Inks Containing Colorant Compounds," with the named inventor Jeffery H. Banning, the disclosure of which is totally incorporated herein by reference, discloses a phase change ink composition comprising a phase change ink carrier and a colorant compound.

### BACKGROUND

The present disclosure is generally related to phase change inks. More specifically, the present disclosure is directed to hot melt or phase change inks containing specific colorant compounds. More specifically, the present disclosure is directed to a phase change ink composition containing a colorant composition comprising a basic dye component and a counter ion comprising a waxy moiety. One embodiment of the present disclosure is directed to a phase change ink carrier and a compound of the formula

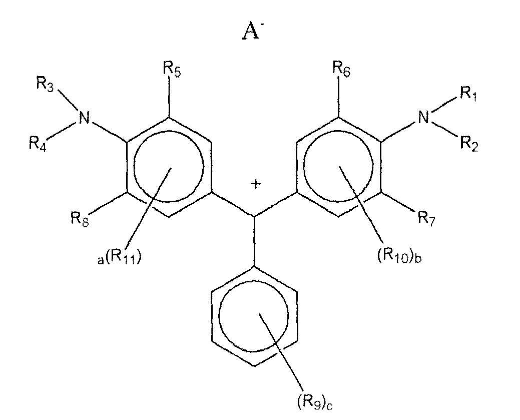

wherein R₁, R₂, R₃, and R₄, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring,
wherein R₃ and R₄ can be joined together to form a ring, wherein R₅ and R₆ can be joined together to form a ring, wherein R₅, R₆, R₇, and R₈, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅ and R₆ can be joined together to form a ring, and
wherein R₁, R₂, R₃, R₄, R₅, and R₆ can each be joined to a phenyl ring in the central structure, wherein R₉, R₁₀, and R₁₁, are each independently of the others optionally included and wherein if included each R₉, R₁₀, and R₁₁, independently of the others, is (i) a hydroxy group, (ii) a halogen atom, (iii) an amine group, (iv) an imine group, (v) an ammonium group, (vi) a cyano group, (vii) a pyridine group, (viii) a pyridinium group, (ix) an ether group, (x) an aldehyde group, (xi) a ketone group, (xii) an ester group, (xiii) an amide group, (xiv) a carbonyl group, (xv) a thiocarbonyl group, (xvi) a sulfoxide group, (xvii) a nitrile group, (xviii) a mercapto group, (xix) a nitro group, (xx) a nitroso group, (xxi) a sulfone group, (xxii) an acyl group, (xxiii) an acid anhydride group, (xxiv) an azide group, (xxv) an azo group, (xxvi) a cyanato group, (xxvii) an isocyanato group, (xxviii) a thiocyanato group, (xxix) an isothiocyanato group, (xxx) a urethane group, (xxxi) a urea group, or a mixture or combination thereof, wherein two or more substituents can be joined together to form a ring, wherein R₉, R₁₀, and R₁₁ can each be joined to a phenyl ring in the central structure; wherein a, b and c each, independently of the others, is an integer which is 0, 1, 2, or 3; and wherein A⁻ is a waxy counter ion including a sufficient number of carbon atoms in the alkyl portion to be soluble in hot melt ink vehicles (hot melt ink vehicles typically comprising a wax).

In general, phase change inks (sometimes referred to as "hot melt inks") are in the solid phase at ambient temperature, but exist in the liquid phase at the elevated operating temperature of an ink jet printing device. At the jet operating temperature, droplets of liquid ink are ejected from the printing device and, when the ink droplets contact the surface of the recording substrate, either directly or via an intermediate heated transfer belt or drum, they quickly solidify to form a predetermined pattern of solidified ink drops. Phase change inks have also been used in other printing technologies, such as gravure printing, as disclosed in, for example, U.S. Patent 5,496,879 and German Patent Publications DE 4205636AL and DE 420S713AL, the disclosures of each of which are totally incorporated herein by reference.

Phase change inks for color printing typically comprise a phase change ink carrier composition which is combined with a phase change ink compatible colorant. In a specific embodiment, a series of colored phase change inks can be formed by combining ink carrier compositions with compatible subtractive primary colorants. The subtractive primary colored phase change inks can comprise four component dyes, namely, cyan, magenta, yellow and black, although the inks are not limited to these four colors. These subtractive primary colored inks can be formed by using a single dye or a mixture of dyes. For example, magenta can be obtained by using a mixture of Solvent Red Dyes or a composite black can be obtained by mixing several dyes. U.S. Patent 4,889,560, U.S. Patent 4,889,761, and U.S. Patent 5,372,852, the disclosures of each of which are totally incorporated herein by reference, teach that the subtractive primary colorants employed can comprise dyes from the classes of Color Index (C.I.) Solvent Dyes, Disperse Dyes, modified Acid and Direct Dyes, and Basic Dyes. The colorants can also include pigments, as disclosed in, for example, U.S. Patent 5,221,335, the disclosure of which is totally incorporated herein by reference. U.S. Patent 5,621,022, the disclosure of which is totally incorporated herein by reference, discloses the use of a specific class of polymeric dyes in phase change ink compositions.

Phase change inks have also been used for applications such as postal marking, industrial marking, and labeling. Phase change inks are desirable for ink jet printers because they remain in a solid phase at room temperature during shipping, long term storage, and the like. In addition, the problems associated with nozzle clogging as a result of ink evaporation with liquid ink jet inks are largely eliminated, thereby improving the reliability of the ink jet printing. Further, in phase change ink jet printers wherein the ink droplets are applied directly onto the final recording substrate (for example, paper, transparency material, and the like), the droplets solidify immediately upon contact with the substrate, so that migration of ink along the printing medium is prevented and dot quality is improved.

Compositions suitable for use as phase change ink carrier compositions are known. Some representative examples of references disclosing such materials include U.S. Patent 3,653,932, U.S. Patent 4,390,369, U.S. Patent 4,484,948, U.S. Patent 4,684,956, U.S. Patent 4,851,045, U.S. Patent 4,889,560, U.S. Patent 5,006,170, U.S. Patent 5,151,120, U.S. Patent 5,372,852, U.S. Patent 5,496,879, European Patent Publication 0187352, European Patent Publication 0206286, German Patent Publication DE 4205636AL, German Patent Publication DE 4205713AL, and PCT Patent Application WO 94/04619, the disclosures of each of which are totally incorporated herein by reference. Suitable carrier materials can include paraffins, microcrystalline waxes, polyethylene waxes, ester waxes, fatty acids and other waxy materials, fatty amide containing materials, sulfonamide materials, resinous materials made from different natural sources (tall oil rosins and rosin esters, for example), and many synthetic resins, oligomers, polymers, and copolymers.

While known compositions and processes are suitable for their intended purposes, a need remains for new colorant compositions for making composite black and other colors (for example, green). In addition, a need remains for colorant compositions particularly suitable for use in phase change inks. Further, a need remains for black and other colorants with desirable thermal stability. Additionally, a need remains for black and other colorants that exhibit minimal undesirable discoloration when exposed to elevated temperatures. There is also a need for black and other colorants that exhibit a desirable brilliance. In addition, there is a need for black and other colorants that exhibit a desirable hue. Further, there is a need for black and other colorants that are of desirable chroma. Additionally, there is a need for black and other colorants that have desirably high lightfastness characteristics. A need also remains for black and other colorants that have a desirably pleasing color. In addition, a need remains for black and other colorants that exhibit desirable solubility characteristics in phase change ink carrier compositions. Further, a need remains for black and other colorants that enable phase change inks to be jetted at temperatures of over 135 °C while maintaining thermal stability. Further, a need remains for magenta colorants for use in solid ink printers that operate with lower print head temperatures much lower than 135 °C as well as in ultraviolet radiation curable systems. Additionally, a need remains for black and other colorants that enable phase change inks that generate images with low pile height. There is also a need for black and other colorants that enable phase change inks that generate images that approach lithographic thin image quality. In addition, there is a need for black and other colorants that exhibit oxidative stability. Further, there is a need for black and other colorants that do not precipitate from phase change ink carriers. Additionally, there is a need for black and other colorants that do not, when included in phase change inks, diffuse into adjacently printed inks of different colors. A need also remains for black and other colorants that do not leach from media such as phase change ink carriers into tape adhesives, paper, or the like. In addition, a need remains for black and other colorants that, when incorporated into phase change inks, do not lead to clogging of a phase change ink jet printhead. Further, there is a need for black and other colorants that enable phase change inks that generate images with sharp edges that remain sharp over time. Additionally, there is a need for black and other colorants that enable phase change inks that generate images which retain their high image quality in warm climates. Further, there is a need for black and other colorants that enable phase change inks that generate images of desirably high optical density. Additionally, there is a need for black and other colorants that, because of their good solubility in phase change ink carriers, enable the generation of images of low pile height without the loss of desirably high optical density. A need also remains for black and other colorants that enable cost-effective inks.

The appropriate components and process aspects of the each of the foregoing may be selected for the present disclosure in embodiments thereof.

### SUMMARY

The present invention provides:
(1) A phase change ink composition comprising:
   a phase change ink carrier; and
   a colorant compound comprising a basic dye component and a waxy counter ion comprising a waxy moiety.
(2) A phase change ink composition according to (1), wherein the phase change ink carrier comprises one or more amides, and one or more isocyanate-derived materials, or a mixture of one or more amides and one or more isocyanate-derived materials.
(3) A phase change ink composition according to (1), wherein the phase change ink carrier comprises one or more materials selected from paraffins, microcrystalline waxes, polyethylene waxes, ester waxes, amide waxes, fatty acids, fatty alcohols, fatty amides, sulfonamide materials, tall oil rosins, rosin esters, ethylene/vinyl acetate copolymers, ethylene/acrylic acid copolymers, ethylene/vinyl acetate/acrylic acid copolymers, copolymers of acrylic acid with polyamides, ionomers, and mixtures thereof.
(4) A phase change ink composition according to (1), wherein the phase change ink carrier is present in the ink in an amount of at least about 0.1 percent by weight of the ink and wherein the phase change ink carrier is present in the ink in an amount of no more than about 99 percent by weight of the ink.
(5) A phase change ink composition according to (1), wherein the ink further contains an antioxidant.
(6) A phase change ink composition according to (1), wherein the ink further contains a viscosity modifier.
(7) A phase change ink composition according to (1), wherein the colorant is present in the ink in an amount of at least about 0.1 percent by weight of the ink to an amount of no more than about 20 percent by weight of the ink.
(8) A phase change ink composition according to (1), wherein the ink has a melting point of no lower than about 50°C and wherein the ink has a melting point of no higher than about 160°C.
(9) A phase change ink composition according to (1), wherein the ink has a melt viscosity at a temperature of about 140°C of no less than about 1 centipoise to no more than about 30 centipoise.
(10) A phase change ink composition according to (1), wherein the counter ion comprising a waxy moiety is a monomeric waxy counter ion, an oligomeric waxy counter ion, or a polymeric waxy counter ion.
(11) A phase change ink composition according to (1), wherein the waxy counter ion includes an alkyl group having from about 4 to about 150 carbon atoms.
(12) A phase change ink composition according to (1), wherein the waxy counter ion includes an alkylaryl group having from about 4 to about 150 carbon atoms or an arylalkyl group having from about 4 to about 150 carbon atoms.
(13) A phase change ink composition according to (1), wherein the waxy counter ion includes an aryl group having about 6 to about 20 carbon atoms.
(14) A phase change ink composition according to (1), wherein the waxy counter ion is a compound of the formula

   R₂₀-(An)_{q}

   wherein q is an integer which is 1, 2, 3, 4, 5, or 6, each An, independently of the others, is a carboxylic acid group, a carboxylate group, an organosulfate group, an organosulfonate group, an organosulfinate group, or an organophosphate group; and
   wherein R₂₀ is an alkyl group, an alkylene group, an aryl group, an arylene group, an arylalkyl group, an arylalkylene group, an alkylaryl group, or an alkylarylene group.
(15) A phase change ink composition according to (1), wherein the waxy counter ion is a compound of the formula

   A₁₁-R₂₁-A₂₂

   wherein A₁₁ and A₂₂ each, independently of the other, are anionic groups;
   wherein R₂₁ is an alkylene group, an arylene group, an arylalkylene group, or an alkylarylene group.
(16) A phase change ink composition comprising:
   a phase change ink carrier; and
   a colorant compound of the formula 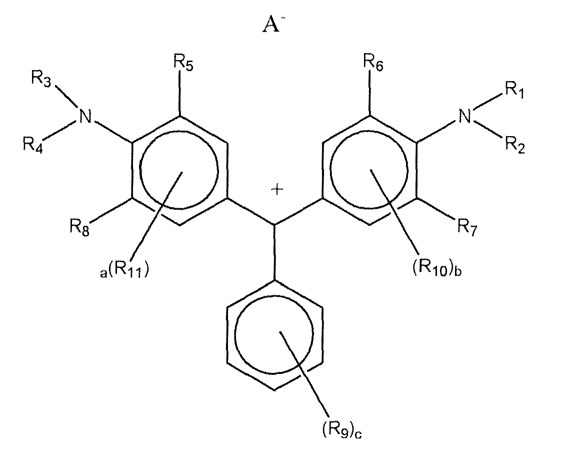
   wherein R₁, R₂, R₃, and R₄, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅ and R₆ can be joined together to form a ring, wherein R₅, R₆, R₇, and R₈, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅ and R₆ can be joined together to form a ring, and wherein R₁, R₂, R₃, R₄, R₅, and R₆ can each be joined to a phenyl ring in the central structure, wherein R₉, R₁₀, and R₁₁, are each independently of the others optionally included and wherein if included each R₉, R₁₀, and R₁₁, independently of the others, is (i) a hydroxy group, (ii) a halogen atom, (iii) an amine group, (iv) an imine group, (v) an ammonium group, (vi) a cyano group, (vii) a pyridine group, (viii) a pyridinium group, (ix) an ether group, (x) an aldehyde group, (xi) a ketone group, (xii) an ester group, (xiii) an amide group, (xiv) a carbonyl group, (xv) a thiocarbonyl group, (xvi) a sulfoxide group, (xvii) a nitrile group, (xviii) a mercapto group, (xix) a nitro group, (xx) a nitroso group, (xxi) a sulfone group, (xxii) an acyl group, (xxiii) an acid anhydride group, (xxiv) an azide group, (xxv) an azo group, (xxvi) a cyanato group, (xxvii) an isocyanato group, (xxviii) a thiocyanato group, (xxix) an isothiocyanato group, (xxx) a urethane group, (xxxi) a urea group, or a mixture or combination thereof, wherein two or more substituents can be joined together to form a ring, wherein R₉, R₁₀, and R₁₁ can each be joined to a phenyl ring in the central structure;
   wherein a, b and c each, independently of the others, is an integer which is 0, 1, 2, or 3; and
   wherein A⁻ is the waxy counter ion.
(17) A phase change ink composition according to (16), wherein the waxy counter ion is a monomeric waxy counter ion, an oligomeric waxy counter ion, or a polymeric waxy counter ion.
(18) A phase change ink composition according to (16), wherein the waxy counter ion is a compound of the formula

   R₂₀-(An)_{q}

   wherein q is an integer which is 1, 2, 3, 4, 5, or 6, each An, independently of the others, is a carboxylic acid group, a carboxylate group, an organosulfate group, an organosulfonate group, an organosulfinate group, or an organophosphate group; and
   wherein R₂₀ is an alkyl group, an alkylene group, an aryl group, an arylene group, an arylalkyl group, an arylalkylene group, an alkylaryl group, or an alkylarylene group.
(19) A phase change ink composition according to (16), wherein the waxy counter ion is a compound of the formula

   A₁₁-R₂₁-A₂₂

   wherein A₁₁ and A₂₂ each, independently of the other, are anionic groups;
   wherein R₂₁ is an alkylene group, an arylene group, an arylalkylene group, or an alkylarylene group.
(20) A phase change ink composition according to (16), wherein the waxy counter ion is dodecyl benzene sulfonate.
(21) A phase change ink composition according to (16), wherein a, b and c are each zero.
(22) A phase change ink composition according to (16), wherein at least one of R₁, R₂, R₃, R₄, R₅, R₆, R₇, R₈, R₉, R₁₀, and R₁₁ is an alkyl group.
(23) A phase change ink composition according to (16), wherein at least one of R₁, R₂, R₃, R₄, R₅, R₆, R₇, R₈, R₉, R₁₀, and R₁₁ is an aryl group.
(24) A phase change ink composition according to (16), wherein each of R₁, R₂, R₃, and R₄ is hydrogen.
(25) A phase change ink according to (1), wherein the basic dye is selected from the group consisting of Basic Green 1, 4, and 5, Basic Orange 2, 14, and 21, Basic Red 1, 2, 5, 9, and 29, Basic Violet 1, 2, 3, 4, 10; Basic Yellow 1 and 2, and mixtures and combinations thereof.
(26) A phase change ink composition according to (1), having a colorant of the formula 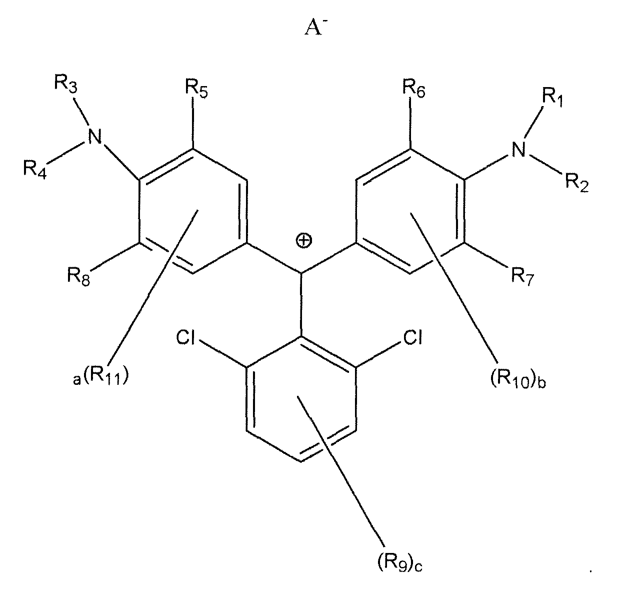
(27) A phase change ink composition according to (1), having a colorant of the formula 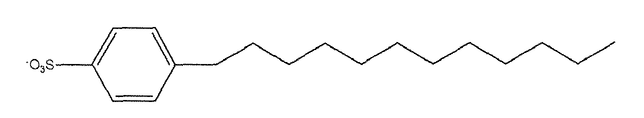 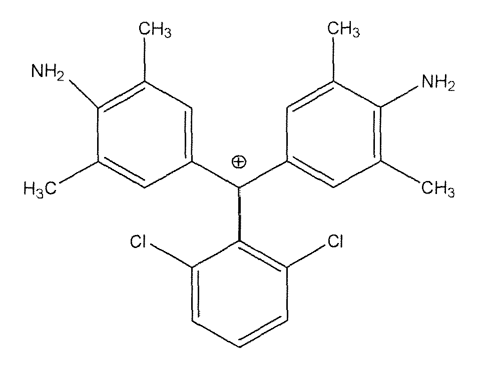
(28) A phase change ink composition according to (1), having a colorant of the formula 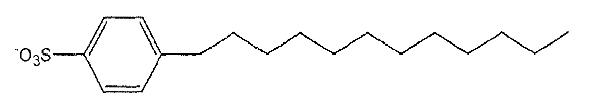 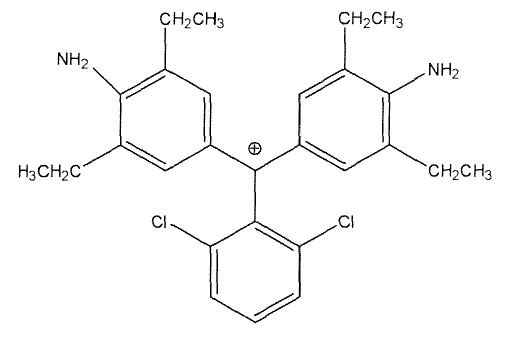
(29) A phase change ink composition according to (1), having a colorant of the formula 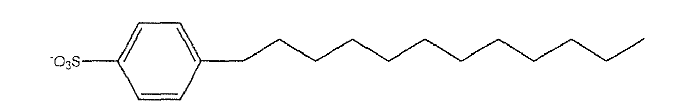 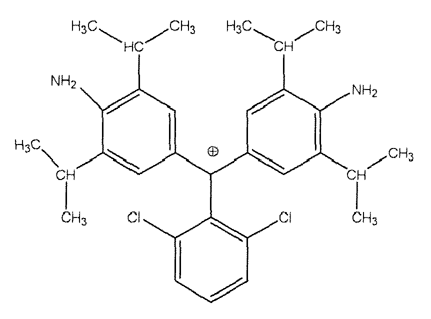
(30) A process which comprises (1) incorporating into an ink jet printing apparatus a phase change ink composition comprising a phase change ink carrier and a colorant compound of the formula 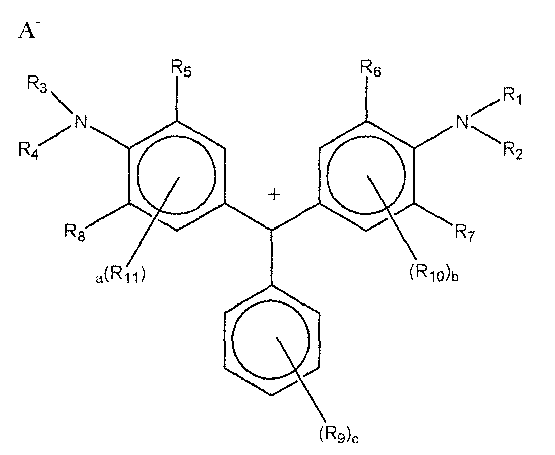 wherein R₁, R₂, R₃, and R₄, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅ and R₆ can be joined together to form a ring, wherein R₅, R₆, R₇, and R₈, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅ and R₆ can be joined together to form a ring, and wherein R₁, R₂, R₃, R₄, R₅, and R₆ can each be joined to a phenyl ring in the central structure, wherein R₉, R₁₀, and R₁₁, are each independently of the others optionally included and wherein if included each R₉, R₁₀, and R₁₁, independently of the others, is (i) a hydroxy group, (ii) a halogen atom, (iii) an amine group, (iv) an imine group, (v) an ammonium group, (vi) a cyano group, (vii) a pyridine group, (viii) a pyridinium group, (ix) an ether group, (x) an aldehyde group, (xi) a ketone group, (xii) an ester group, (xiii) an amide group, (xiv) a carbonyl group, (xv) a thiocarbonyl group, (xvi) a sulfoxide group, (xvii) a nitrile group, (xviii) a mercapto group, (xix) a nitro group, (xx) a nitroso group, (xxi) a sulfone group, (xxii) an acyl group, (xxiii) an acid anhydride group, (xxiv) an azide group, (xxv) an azo group, (xxvi) a cyanato group, (xxvii) an isocyanato group, (xxviii) a thiocyanato group, (xxix) an isothiocyanato group, (xxx) a urethane group, (xxxi) a urea group, or a mixture or combination thereof, wherein two or more substituents can be joined together to form a ring, wherein R₉, R₁₀, and R₁₁ can each be joined to a phenyl ring in the central structure;
   wherein a, b and c each, independently of the others, is an integer which is 0, 1, 2, or 3; and
   wherein A⁻ is the waxy counter ion;
   (2) melting the ink; and
   (3) causing droplets of the melted ink to be ejected in an imagewise pattern onto a substrate.
(31) A process according to (30), wherein the printing apparatus employs a piezoelectric printing process wherein droplets of the ink are caused to be ejected in imagewise pattern by oscillations of piezoelectric vibrating elements.
(32) A process according to (30), wherein the substrate is a final recording sheet and droplets of the melted ink are ejected in an imagewise pattern directly onto the final recording sheet.
(33) A process according to (30), wherein the substrate is an intermediate transfer member and droplets of the melted ink are ejected in an imagewise pattern onto the intermediate transfer member followed by transfer of the imagewise pattern from the intermediate transfer member to a final recording sheet.
(34) A process according to (33), wherein the intermediate transfer member is heated to a temperature above that of the final recording sheet and below that of the melted ink in the printing apparatus.

The present disclosure is directed to a phase change ink composition comprising a phase change ink carrier and a composition comprising a basic dye component; and a counter ion comprising a waxy moiety. As used herein, the term waxy counter ion comprising a waxy moiety means a counter ion having a waxy moiety including a sufficient number of carbon atoms to be soluble in hot melt or phase change ink vehicles (hot melt ink vehicles typically comprising a wax).

In embodiments, the present disclosure is directed to a phase change ink composition comprising a carrier and a triphenyl methane dye composition having a waxy counter ion. As used herein, the term waxy counter ion means a counter ion having a waxy moiety including a sufficient number of carbon atoms in the alkyl portion to be soluble in hot melt or phase change ink vehicles (hot melt ink vehicles typically comprising a wax). For example, in embodiments, a waxy moiety herein is an alkyl group having from about 4 to about 150 carbon atoms. For example, in embodiments, a waxy moiety herein is an alkyl group having about 4, 5, 6, 7, 8, 9, 10, 12, 16, or about 18 carbon atoms, or about 30 to about 150 carbon atoms, an alkylaryl group having about 4, 5, 6, 7, 8, 9, 10, 12, 16, or about 18 carbon atoms, or about 30 to about 150 carbon atoms, or an arylalkyl group having about 4, 5, 6, 7, 8, 9, 10, 12, 16, or about 18 carbon atoms, or about 30 to about 150 carbon atoms. In embodiments, a waxy moiety herein is an aryl group having about 6 to about 20 carbon atoms, or about 6 to about 12 carbon atoms. In embodiments, the ratio of alkyl carbon atoms to aryl carbon atoms in the waxy moiety is about 10 carbon atoms to about 1 carbon atom, or about 2 carbon atoms to about 1 carbon atom.

In embodiments, the present disclosure is directed to a phase change ink composition comprising a carrier and a compound of the formula

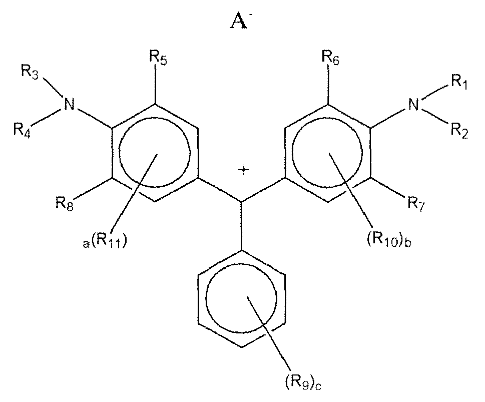

wherein R₁, R₂, R₃, and R₄, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅ and R₆ can be joined together to form a ring, wherein R₅, R₆, R₇, and R₈, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅ and R₆ can be joined together to form a ring, and wherein R₁, R₂, R₃, R₄, R₅, and R₆ can each be joined to a phenyl ring in the central structure, wherein R₉, R₁₀, and R₁₁, are each independently of the others optionally included and wherein if included each R₉, R₁₀, and R₁₁, independently of the others, is (i) a hydroxy group, (ii) a halogen atom, (iii) an amine group, (iv) an imine group, (v) an ammonium group, (vi) a cyano group, (vii) a pyridine group, (viii) a pyridinium group, (ix) an ether group, (x) an aldehyde group, (xi) a ketone group, (xii) an ester group, (xiii) an amide group, (xiv) a carbonyl group, (xv) a thiocarbonyl group, (xvi) a sulfoxide group, (xvii) a nitrile group, (xviii) a mercapto group, (xix) a nitro group, (xx) a nitroso group, (xxi) a sulfone group, (xxii) an acyl group, (xxiii) an acid anhydride group, (xxiv) an azide group, (xxv) an azo group, (xxvi) a cyanato group, (xxvii) an isocyanato group, (xxviii) a thiocyanato group, (xxix) an isothiocyanato group, (xxx) a urethane group, (xxxi) a urea group, or a mixture or combination thereof, wherein two or more substituents can be joined together to form a ring, wherein R₉, R₁₀, and R₁₁ can each be joined to a phenyl ring in the central structure; wherein a, b and c each, independently of the others, is an integer which is 0, 1, 2, or 3; and wherein A⁻ is a waxy counter ion.

### DETAILED DESCRIPTION

The present disclosure is directed to phase change inks containing colorant compositions comprising a basic dye component having a counter ion comprising a waxy moiety, also termed herein a waxy counter ion. As used herein, the term waxy counter ion means a counter ion having a waxy moiety including a sufficient number of carbon atoms in the alkyl portion to be soluble in hot melt or phase change ink vehicles (hot melt ink vehicles typically comprising a wax). Colorant compositions disclosed herein can include any desired basic dye. For example, basic dyes can be selected from any basic dye listed in the Color Index, known to those of skill in the art, including but not limited to, for example, analogs of Basic Green 1, 4, and 5; Basic Orange 2, 14, 21; Basic Red 1, 2, 5, 9, and 29; Basic Violet 1, 2, 3, 4, 10; and Basic Yellow 1 and 2, among others, and mixtures and combinations thereof. See, for example, Color Index International, a reference database jointly maintained by the Society of Dyers and Colourists and the American Association of Textile Chemists and Colorists, available online at http://www.colour-index.org/.

In a specific embodiment herein, a phase change ink composition comprising a carrier and a composition comprising a triphenyl methane dye having a waxy counter ion is disclosed.

As used herein, the term waxy counter ion means a counter ion having a waxy moiety including a sufficient number of carbon atoms in the alkyl portion to be soluble in hot melt ink vehicles (hot melt ink vehicles typically comprising a wax). For example, in embodiments, a waxy moiety herein is an alkyl group having from about 4 to about 150 carbon atoms. For example, in embodiments, a waxy moiety herein is an alkyl group having about 4, 5, 6, 7, 8, 9, 10, 12, 16, or about 18 carbon atoms, or about 30 to about 150 carbon atoms, an alkylaryl group having about 4, 5, 6, 7, 8, 9, 10, 12, 16, or about 18 carbon atoms, or about 30 to about 150 carbon atoms, or an arylalkyl group having about 4, 5, 6, 7, 8, 9, 10, 12, 16, or about 18 carbon atoms, or about 30 to about 150 carbon atoms. In embodiments, a waxy moiety herein is an aryl group having about 6 to about 20 carbon atoms, or about 6 to about 12 carbon atoms. In embodiments, the ratio of alkyl carbon atoms to aryl carbon atoms in the waxy moiety is about 10 carbon atoms to about 1 carbon atom, or about 2 carbon atoms to about 1 carbon atom.

In embodiments, a phase change ink composition comprising a carrier and a compound of the formula

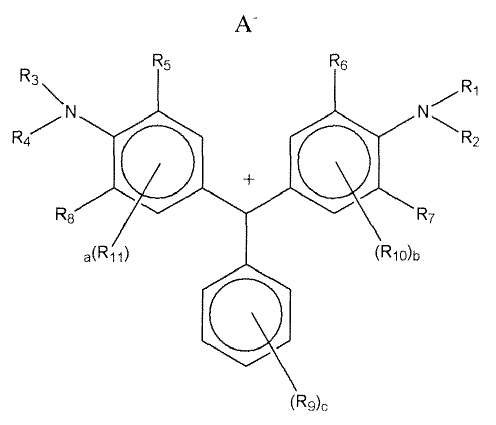

is disclosed wherein R₁, R₂, R₃, R₄, R₅, R₆, R₇, and R₈ each, independently of the others, is (i) a hydrogen atom, (ii) an alkyl group (including linear, branched, saturated, unsaturated, cyclic, substituted, and unsubstituted alkyl groups, and wherein hetero atoms, such as oxygen, nitrogen, sulfur, silicon, boron, phosphorus, and the like either may or may not be present in the alkyl group), in one embodiment with at least 1 carbon atom, in another embodiment with at least about 2 carbon atoms, in yet another embodiment with at least about 6 carbon atoms, in another embodiment with at least about 8 carbon atoms, and in yet another embodiment with at least about 18 carbon atoms, and in one embodiment with no more than about 55 carbon atoms, in another embodiment with no more than about 30 carbon atoms, and in yet another embodiment with no more than about 20 carbon atoms, although the number of carbon atoms can be outside of these ranges, (iii) an aryl group (including unsubstituted and substituted aryl groups, and wherein hetero atoms, such as oxygen, nitrogen, sulfur, silicon, phosphorus, and the like either may or may not be present in the aryl group), in one embodiment with at least about 6 carbon atoms, in another embodiment with at least about 10 carbon atoms, and in yet another embodiment with at least about 14 carbon atoms, and in one embodiment with no more than about 26 carbon atoms, in another embodiment with no more than about 22 carbon atoms, and in yet another embodiment with no more than about 18 carbon atoms, although the number of carbon atoms can be outside of these ranges, (iv) an arylalkyl group, (including unsubstituted and substituted arylalkyl groups, wherein the alkyl portion of the arylalkyl group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the arylalkyl group), in one embodiment with at least about 7 carbon atoms, in another embodiment with at least about 12 carbon atoms, and in yet another embodiment with at least about 18 carbon atoms, and in one embodiment with no more than about 55 carbon atoms, in another embodiment with no more than about 30 carbon atoms, and in yet another embodiment with no more than about 20 carbon atoms, although the number of carbon atoms can be outside of these ranges, such as benzyl or the like or (v) an alkylaryl group, (including unsubstituted and substituted alkylaryl groups, wherein the alkyl portion of the alkylaryl group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the alkylaryl group), in one embodiment with at least about 7 carbon atoms, in another embodiment with at least about 12 carbon atoms, and in yet another embodiment with at least about 18 carbon atoms, and in one embodiment with no more than about 55 carbon atoms, in another embodiment with no more than about 30 carbon atoms, and in yet another embodiment with no more than about 20 carbon atoms, although the number of carbon atoms can be outside of these ranges, such as tolyl or the like wherein R₁ and R₂ can be joined together to form a ring, wherein R₃ and R₄ can be joined together to form a ring, wherein R₅ and R₆ can be joined together to form a ring, and wherein R₁, R₂, R₃, R₄, R₅ and R₆ can each be joined to a phenyl ring in the central structure;

wherein R₉, R₁₀, and R₁₁, are each independently of the others optionally included and wherein if included each of R₉, R₁₀, and R₁₁, independently of the others, is (i) an alkyl group (including linear, branched, saturated, unsaturated, cyclic, substituted, and unsubstituted alkyl groups, and wherein hetero atoms, such as oxygen, nitrogen, sulfur, silicon, phosphorus, and the like either may or may not be present in the alkyl group), in one embodiment with at least about 1 carbon atom, and in one embodiment with no more than about 50 carbon atoms, in another embodiment with no more than about 30 carbon atoms, and in yet another embodiment with no more than about 18 carbon atoms, although the number of carbon atoms can be outside of these ranges, (ii) an aryl group (including unsubstituted and substituted aryl groups, and wherein hetero atoms, such as oxygen, nitrogen, sulfur, silicon, phosphorus, and the like either may or may not be present in the aryl group), in one embodiment with at least about 6 carbon atoms, and in one embodiment with no more than about 55 carbon atoms, in another embodiment with no more than about 30 carbon atoms, and in yet another embodiment with no more than about 18 carbon atoms, although the number of carbon atoms can be outside of these ranges, (iii) an arylalkyl group (including unsubstituted and substituted arylalkyl groups, wherein the alkyl portion of the arylalkyl group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the arylalkyl group), in one embodiment with at least about 7 carbon atoms, and in one embodiment with no more than about 55 carbon atoms, in another embodiment with no more than about 30 carbon atoms, and in yet another embodiment with no more than about 18 carbon atoms, although the number of carbon atoms can be outside of these ranges, such as benzyl or the like, (iv) an alkylaryl group (including unsubstituted and substituted alkylaryl groups, wherein the alkyl portion of the alkylaryl group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the alkylaryl group), in one embodiment with at least about 7 carbon atoms, and in one embodiment with no more than about 55 carbon atoms, in another embodiment with no more than about 30 carbon atoms, and in yet another embodiment with no more than about 18 carbon atoms, although the number of carbon atoms can be outside of these ranges, such as tolyl or the like, (v) a halogen atom, such as fluorine, chlorine, bromine, iodine, or the like, (vi) an ester group, (vii) an amide group, (viii) a sulfone group, (ix) an amine group or ammonium group, (x) a nitrile group, (xi) a nitro group, (xii) a hydroxy group, (xiii) a cyano group, (xiv) a pyridine or pyridinium group, (xv) an ether group, (xvi) an aldehyde group, (xvii) a ketone group, (xviii) a carbonyl group, (xix) a thiocarbonyl group, (xx) a sulfide group, (xxi) a sulfoxide group, (xxii) a mercapto group, (xxiii) a nitroso group, (xxiv) an acyl group, (xxv) an acid anhydride group, (xxvi) an azide group, (xxvii) an azo group, (xxviii) a cyanato group, (xxix) an isocyanato group, (xxx) a thiocyanato group, (xxxi) an isothiocyanato group, (xxxii) a urethane group, or (xxxiii) a urea group, wherein R₉, R₁₀ and R₁₁ can each be joined to a phenyl ring in the central structure; wherein a, b and c each, independently of the others, is an integer which is 0, 1, 2, or 3; wherein A⁻ is a waxy counter ion including a sufficient number of carbon atoms in the alkyl portion to be soluble in hot melt ink vehicles (hot melt ink vehicles typically comprising a wax). For example, in embodiments, a waxy moiety herein is an alkyl group having from about 4 to about 150 carbon atoms. For example, in embodiments, a waxy moiety herein is an alkyl group having about 4, 5, 6, 7, 8, 9, 10, 12, 16, or about 18 carbon atoms, or about 30 to about 150 carbon atoms, an aryl group having from about 6 to about 20 carbon atoms or from about 6 to about 12 carbon atoms, an alkylaryl group having about 4, 6, 7, 8, 9, 10, 12, 16, or about 18 carbon atoms, or about from 30 to about 150 carbon atoms, or an arylalkyl group having about 6, 7, 8, 9, 10, 12, 16, or about 18 carbon atoms, or about 30 to about 150 carbon atoms. In embodiments, a waxy moiety herein is an aryl group having from about 6 to about 20 carbon atoms, about 6 to about 12. In embodiments, the ratio of alkyl carbon atoms to aryl carbon atoms in the waxy moiety is from about 10 to about 1 or from about 2 to about 1.

In embodiments, A⁻ is a waxy organic anion. The waxy organic anion can be monomeric, oligomeric, polymeric, or the like. Examples of waxy monomeric organic anions include those of the formula R₂₀-(An)_{q} wherein q is an integer of 1, 2, 3, 4, 5, or 6, each An, independently of the others, is a carboxylic acid group, a carboxylate group (COO⁻) an organosulfate group, an organosulfonate group, an organosulfinate group, or an organophosphate group, for example, in embodiments, a sulfonic acid

R₂₀-SO₃H_{,}

a sulfonate

R₂₀-SO₃⁻,

a sulfinic acid

R₂₀-SO₂H_{,}

a sulfinate

R₂₀-SO₃⁻,

R₂₀-O-SO₃H,

a sulfate

R₂₀-O-SO₃⁻,

a phosphonic acid

R₂₀-PO₃H₂,

a phosphonate

R₂₀-PO₃H⁻,

a phosphinic acid

R₂₀-PO₂H,

a phosphinate

R₂₀-PO₂⁻,

and the like; and R₂₀ is an alkyl (when q is 1) or alkylene (when q is 2, 3, 4, 5, or 6) group (including linear, branched, saturated, unsaturated, cyclic, substituted, and unsubstituted alkyl and alkylene groups, and wherein hetero atoms, such as oxygen, nitrogen, sulfur, silicon, phosphorus, and the like either may or may not be present in the alkyl or alkylene group), in one embodiment with at least about 4 carbon atoms, in another embodiment with at least about 6 carbon atoms, and in another embodiment with at least about 6, 7, 8, 9, 10, 12, 16, or 18 carbon atoms, in another embodiment with about 30 to about 150 carbon atoms, although the number of carbon atoms can be outside of these ranges provided the counter ion has sufficient carbon atoms or structure to function as a waxy counter ion providing a wax solubilizing effect to the composition in ink jet vehicles, an aryl (when q is 1) or arylene (when q is 2, 3, 4, 5, or 6) group (including unsubstituted and substituted aryl and arylene groups, and wherein hetero atoms, such as oxygen, nitrogen, sulfur, silicon, phosphorus, and the like either may or may not be present in the aryl or arylene group), in one embodiment with at least about 6 carbon atoms, and in one embodiment with no more than about 100 carbon atoms, in another embodiment with no more than about 36 carbon atoms, and in yet another embodiment with no more than about 18 carbon atoms, although the number of carbon atoms can be outside of these ranges, provided the counter ion is a waxy counter ion, an arylalkyl (when q is 1) or arylalkylene (when q is 2, 3, 4, 5, or 6) group (including unsubstituted and substituted arylalkyl or arylalkylene groups, wherein the alkyl portion of the arylalkyl or arylalkylene group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the arylalkyl or arylalkylene group), in one embodiment with at least about 7 carbon atoms, and in one embodiment with no more than about 50 carbon atoms, in another embodiment with no more than about 30 carbon atoms, and in yet another embodiment with no more than about 20 carbon atoms, although the number of carbon atoms can be outside of these ranges, provided the counter ion is a waxy counter ion, or an alkylaryl (when q is 1) or alkylarylene (when q is 2, 3, 4, 5, or 6) group (including unsubstituted and substituted alkylaryl or alkylarylene groups, wherein the alkyl portion of the alkylaryl or alkylarylene group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the alkylaryl or alkylarylene group), in one embodiment with at least about 6 carbon atoms, and in one embodiment with no more than about 10 carbon atoms, in another embodiment with no more than about 14 carbon atoms, and in yet another embodiment with no more than about 22 carbon atoms, although the number of carbon atoms can be outside of these ranges provided the counter ion is a waxy counter ion, and wherein the substituents on the substituted alkyl, alkylene, aryl, arylene, arylalkyl, arylalkylene, alkylaryl, and alkylarylene groups can be (but are not limited to) hydroxy groups, halogen atoms, amine groups, imine groups, ammonium groups, cyano groups, pyridine groups, pyridinium groups, ether groups, aldehyde groups, ketone groups, ester groups, amide groups, carbonyl groups, thiocarbonyl groups, sulfate groups, sulfonate groups, sulfide groups, sulfoxide groups, phosphine groups, phosphonium groups, phosphate groups, nitrile groups, mercapto groups, nitro groups, nitroso groups, sulfone groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring.

Examples of suitable waxy monomeric anions include monocarboxylic acid derived anions, such as acetate (CH₃COO⁻), propionate (CH₃CH₂COO⁻), butyrate (CH₃(CH₂)₂COO⁻), valerate (CH₃(CH₂)₃COO⁻), hexanoate (CH₃(CH₂)₄COO⁻), heptanoate (CH₃(CH₂)₅COO⁻), octanoate (CH₃(CH₂)₆COO⁻), nonanoate (CH₃(CH₂)₇COO⁻), decanoate (CH₃(CH₂)₈COO⁻), undecanoate (CH₃(CH₂)₉COO⁻), laurate (CH₃(CH₂)₁₀COO⁻), tridecanoate (CH₃(CH₂)₁₁COO⁻), myristate (CH₃(CH₂)₁₂COO⁻), pentadecanoate (CH₃(CH₂)₁₃COO⁻), palmitate (CH₃(CH₂)₁₄COO⁻), heptadecanoate (CH₃(CH₂)₁₅COO⁻), stearate (CH₃(CH₂)₁₆COO⁻), nonadecanoate (CH₃(CH₂)₁₇COO⁻), eicosanoate (CH₃(CH₂)₁₈COO⁻), heneicosanoate (CH₃(CH₂)₁₉COO⁻), docosanoate (CH₃(CH₂)₂₀COO⁻), tricosanoate (CH₃(CH₂)₂₁COO⁻), tetracosanoate (CH₃(CH₂)₂₂COO⁻), hexacosanoate (CH₃(CH₂)₂₄COO⁻), heptacosanoate (CH₃(CH₂)₂₅COO⁻), octacosanoate (CH₃(CH₂)₂₆COO⁻), triacontanoate (CH₃(CH₂₈COO⁻), acetylacetonate, isobutyrate, ethylbutyrate, trimethylacetate, 2-methylbutyrate, isovalerate, 2,2-dimethylbutyrate, tert-butylacetate, 2-methylvalerate, 2,2,6,6-tetramethyl-3,5-heptanedionate, 2-propylpentanoate, 3-methylvalerate, 4-methylvalerate, 2-methylhexanoate, 2-ethylhexanoate, pyruvate, 2-ketobutyrate, 3-methyl-2-oxobutanoate, 2-oxopentanoate, 3-methyl-2-oxopentanoate, 4-methyl-2-oxopentanoate, 2-oxohexanoic acid, 3-fluoropyruvate, 4-methylthio-2-oxobutyrate, acrylate, methacrylate, crotonate, vinylacetate, tiglate, 3,3-dimethylacrylate, trans-2-pentenoate, 4-pentenoate, trans-2-methyl-2-pentenoate, 2,2-dimethyl-4-pentenoate, trans-2-hexenoate, trans-3-hexenoate, 2-ethyl-2-hexenoate, 6-heptenoate, 2-octenoate, citronellate, undecylenate, myristoleate, palmitoleate, oleate, elaidate, 11-eicosenoate, erucate, nervonate, chloroacetate, bromoacetate, iodoacetate, difluoroacetate, dichloroacetate, dibromoacetate, trifluoroacetate, chlorodifluoroacetate, trichloroacetate, tribromoacetate, 2-chloropropionate, 3-chloropropionate, 2-bromopropionate, 3-bromopropionate, 2-iodopropionate, 3-iodopropionate, 2,2-dichloropropionate, 2,3-dibromopropionate, pentafluoropropionate, 2-bromo-2-methylpropionate, 3-bromo-2-(bromomethyl)-propionate, 3-chloropivalate, 3,3-dichloropivalate, 4-chlorobutyrate, 2-bromobutyrate, 4-bromobutyrate, heptafluorobutyrate, 2-bromo-3-methylbutyrate, 5-chlorovalerate, 2-bromovalerate, 5-bromovalerate, nonafluoropentanoate, 2-bromohexanoate, 6-bromohexanoate, tridecafluoroheptanoate, 2-bromooctanoate, 8-bromooctanoate, pentadecafluorooctanoate, heptadecafluorononanoate, nonadecafluorodecanoate, 11-bromoundecanoate, 12-bromododecanoate, perfluorododecanoate, 2-bromotetradecanoate, 2-bromohexadecanoate, 3-chloroacrylate, 2-bromoacrylate, 2-(trifluoromethyl)acrylate, 2-(bromomethyl)acrylate, 4,4,4-trifluoro-3-methyl-2-butenoate, methoxyacetate, ethoxyacetate, 3-methoxypropionate, 2-(2-methoxyethoxy)acetate, 2-[2-(methoxyethoxy)ethoxy]acetate, tetrahydro-2-furoate, tetrahydro-3-furoate, 2, 3, 4, 6-di-O-isopropylidene-2-ketogluconate, 3-nitropropionate, 6-nitrocaproate, 12-nitrododecanoate, levulinate, 4-acetylbutyrate, 6-oxoheptanoate, 7-oxooctanoate, 4,6-dioxoheptanoate, 3,4-dihydro-2,2-dimethyl-4-oxo-2H-pyran-6-carboxylate, cyclopentanecarboxylate, cyclopentylacetate, 3-cyclopentylpropionate, 3-methyl-2-(nitromethyl)-5-oxocyclopentaneacetate, 6,6,7,7,8,8,8-heptafluoro-2,2-dimethyl-3,5,-octanedionate, cyclohexanecarboxylate, cyclohexylacetate, dicyclohexylacetate, cyclohexanepropionate, cyclohexanebutyrate, cyclohexanepentanoate, 1-methyl-1-cyclohexanecarboxylate, 2-methyl-1-cyclohexanecarboxylate, 3-methyl-1-cyclohexanecarboxylate, 4-methyl-1-cyclohexanecarboxylate, 4-tert-butylcyclohexanecarboxylate, 4-pentylcyclohexanecarboxylate, 4-methylcyclohexaneacetate, 3-methoxycyclohexanecarboxylate, 4-methoxycyclohexanecarboxylate, cyclohexanecarboxylate, 2-norbornaneacetate, 4-pentylbicyclo[2.2.2]octane-1-carboxylate, 3-oxotricyclo[2.2.1.0(2,6)]-heptane-1-carboxylate, 3-noradamantanecarboxylate, 1-adamantanecarboxylate, 1-adamantaneacetate, 1-cyclopentene-1-carboxylate, 2-cyclopentene-1-acetate, 1-cyclohexene-1-carboxylate, 1-methyl-2-cyclohexene-1-carboxylate,

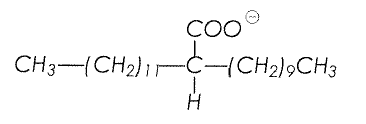

1,4-dihydro-2-methylbenzoate, retinoate, ketopinate, abietate, phenylacetate, 1-phenyl-1-cyclopentanecarboxylate, alpha-phenylcyclopentaneacetate, diphenylacetate, triphenylacetate, 2-phenylpropionate, hydrocinnamate, alpha-methylhydrocinnamate, alpha-(tert-butyl)hydrocinnamate, 2,2-diphenylpropionate, 3,3-diphenylpropionate, 3,3,3-triphenylpropionate, 2-phenylbutyrate, 3-phenylbutyrate, 4-phenylbutyrate, 5-phenylvalerate, 3-methyl-2-phenylvalerate, 6-phenylhexanoate, alpha-fluorophenylacetate, alpha-bromophenylacetate, alpha-methoxyphenylacetate, phenoxy acetate, alpha, beta-dibromohydrocinnamate, 3-phenoxypropionate, 2-phenoxypropionate, 11-phenoxyundecanoate, 2-phenoxybutyrate, alpha-methoxy-alpha-(trifluoromethyl)phenylacetate, (phenylthio)acetate, 3-(phenylthio)acrylate, benzylthioglycolate, 2-ethylthio-2,2-diphenylacetate, 3-benzoylpropionate, 2-methyl-4-oxo-4-phenylbutyrate, 4-benzoylbutyrate, o-tolylacetate, 3-oxo-1-indancarboxylate, 1,2,3,4-tetrahydro-2-naphthoate, (alpha, alpha, alpha-trifluoro-o-tolyl)acetate, 2-fluorophenylacetate, 2-chlorophenylacetate, 2-bromophenylacetate, 2-iodophenylacetate, 2-(2-chlorophenoxy)propionate, 2-methoxyphenylacetate, 3-(2-methoxyphenyl)propionate, 2-nitrophenylacetate, 2-formylphenoxyacetate, m-tolylacetate, 3-fluorophenylacetate, 3-chlorophenylacetate, 3-bromophenylacetate, 2-(3-chlorophenoxy)propionate, (alpha, alpha, alpha-trifluoro-m-tolyl) acetate, 3-methoxyphenylacetate, 3-nitrophenylacetate, p-tolylacetate, 3-(p-tolyl)propionate, (4-methylphenoxy)acetate, 4-isobutyl-alpha-methylphenylacetate, 4-acetylphenoxyacetic acid, 4-(4-chloro-o-tolyloxy)butyrate, 4-fluorophenylacetate, (alpha, alpha, alpha-trifluoro-p-tolyl)acetate, 3-(4-fluorobenzoyl)propionate, 3-(4-chlorobenzoyl)propionate, 4-chlorophenylacetate, bis(4-chlorophenyl)acetate, 4-bromophenylacetate, 3,3,3-tris(4-chlorophenyl)propionate, 4-(bromomethyl)phenylacetate, 1-(4-chlorophenyl)-1-cyclopentanecarboxylate, 4-methoxyphenylacetate, 4-ethoxyphenylacetate, 3-(4-methoxyphenyl)propionate, 4-(4-methoxyphenyl)propionate, 4-chlorophenoxyacetate, bis(4-chlorophenoxy)acetate, 4-(methylthio)-phenylacetate, 4-nitrophenylacetate, 2-(4-nitrophenyl)propionate, 4-(4-nitrophenyl)butyrate, 3-(4-methoxybenzoyl)propionate, 4-fluorophenoxyacetate, 2-(4-chlorophenoxy)propionate, 2-(4-chlorophenoxy)2-methylpropionate, (2,4-di-tert-pentylphenoxy)acetate, 2,6-difluorophenylacetate, 2,4-difluorophenylacetate, 2,5-difluorophenylacetate, 3, 5-ditluorophyenylacetate, 4-chloro-o-tolyloxyacetate, 2,3-dichlorophenoxyacetate, 2, 6-dichlorophenylacetate, 2,4-dichlorophenylacetate, 2,4-dichlorophenoxyacetate, 3,4-dichlorophenylacetate, 3,4-dichlorophenoxyacetate, 3,5-bis(trifluoromethyl)phenylacetate, 4-(2,4-di-tert-pentylphenoxy)butyrate, 2-(2,4-dichlorophenoxy)propionate, 4-(2,4-dichlorophenoxy)propionate, 2,4,5-trichlorophenoxyacetate, 2-(2,4,5-trichlorophenoxy)propionate, (3,4-dimethoxyphenyl)acetate, 4-benzyloxy-3-methoxyphenylacetate, 3,4-(methylenedioxy)phenylacetate, 5-methoxy-1-indanone-3-acetate, 3-(3,4-dimethoxyphenyl)propionate, 4-(3,4-dimethoxyphenyl)butyrate, (2,5-dimethoxyphenyl)acetate, 2,4-dinitrophenylacetate, (3, 5-dimethoxyphenyl)acetate, 3,4,5-trimethoxyphenylacetate, 3-(3,4,5-trimethoxyphenyl)propionate, 2,3,4,5,6-pentafluorophenylacetate, 4-biphenylacetate, 1-naphthylacetate, 2-naphthylacetate, alpha-trityl-2-naphthalenepropionate, (1-naphthoxy)acetate, (2-naphthoxy)acetate, 6-methoxy-alpha-methyl-2-naphthaleneacetate, 9-fluoreneacetate, 1-pyreneacetate, 1-pyrenebutyrate, gamma-oxo-1-pyrenebutyrate, styrylacetate, cinnamate, alpha-methylcinnamate, alpha-fluorocinnamate, alpha-phenylcinnamate, 2-methylcinnamate, 2-fluorocinnamate, 2-(trifluoromethy)cinnamate, 2-chlorocinnamate, 2-methoxycinnamate, 2-nitrocinnamate, 3-fluorocinnamate, 3-(trifluoromethyl)cinnamate, 3-chlorocinnamate, 3-bromocinnamate, 3-methoxycinnamate, 3-nitrocinnamate, 4-methylcinnamate, 4-fluorocinnamate, 4-(trifluoromethyl)cinnamate, 4-chlorocinnamate, 4-bromocinnamate, 4-methoxycinnamate, 4-nitrocinnamate, 4-formylcinnamate, 2,6-difluorocinnamate, 2,4-difluorocinnamate, 2,5-difluorocinnamate, 3,4-difluorocinnamate, 3,5-difluorocinnamate, 2-chloro-6-fluorocinnamate, 2,4-dichlorocinnamate, 3,4-dichlorocinnamate, 5-bromo-2-methoxycinnamate, 2,3-dimethoxycinnamate, 2,4-dimethoxycinnamate, 2,5-dimethoxycinnamate, 3,4-dimethoxycinnamate, 3,4-(methylenedioxy)cinnamate, 3,5-dimethoxycinnamate, 2-chloro-5-nitrocinnamate, 4-chloro-3-nitrocinnamate, 2,3,4-trifluorocinnamate, 3,4,5-trimethoxycinnamate, 2,4,5-trimethoxycinnamate, alpha-methyl-2,4,5-trimethoxycinnamate, 4,5-dimethoxy-2-nitrocinnamate, 2,3,4,5,6-pentafluorocinnamate, 3-methylindene-2-carboxylate, 3-(4-methylbenzoyl)acrylate, 3-(2,5-dimethylbenzoyl)acrylate, 3-(2,3,5,6-tetramethylbenzoyl)acrylate, 3-(4-methoxybenzoyl)acrylate, 3-(4-ethoxybenzoyl)acrylate, 6-methylchromone-2-carboxylate, benzoate, o-toluate, 2-fluorobenzoate, alpha,alpha,alpha-trifluoro-o-toluate, 2-chlorobenzoate, 2-bromobenzoate, 2-iodobenzoate, o-anisate, 2-ethoxybenzoate, 2-nitrobenzoate, 2-acetylbenzoate, 2-(p-toluoyl)benzoate, m-toluate, 3-fluorobenzoate, alpha,alpha,alpha-trifluoro-m-toluate, 3-chlorobenzoate, 3-(chloromethyl)benzoate, 3-bromobenzoate, 3-iodobenzoate, m-anisate, 3-nitrobenzoate, p-toluate, 4-ethylbenzoate, 4-n-propylbenzoate, 4-isopropylbenzoate, 4-n-butylbenzoate, 4-tert-butylbenzoate, 4-pentylbenzoate, 4-hexylbenzoate, 4-heptylbenzoate, 4-octylbenzoate, 4-vinylbenzoate, 4-fluorobenzoate, alpha,alpha,alpha-trifluoro-o-toluate, 4-chlorobenzoate, 4-bromobenzoate, 4-iodobenzoate, 4-(chloromethyl)benzoate, alpha-bromo-p-toluate, p-anisate, 4-(trifluoromethoxy)benzoate, 4-ethoxybenzoate, 4-n-propoxybenzoate, 4-butoxybenzoate, 4-pentyloxybenzoate, 4-hexyloxybenzoate, 4-heptyloxybenzoate, 4-octyloxybenzoate, 4-nonyloxybenzoate, 4-decyloxybenzoate, 4-nonyloxybenzoate, 4-dodecyloxybenzoate, 4-isopropoxybenzoate, 4-(2-cyclohexenyloxy)benzoate, 4-(methylthio)benzoate, 4-(ethylthio)benzoate, 4-nitrobenzoate, 4-acetylbenzoate, 2,3-dimethylbenzoate, 2,6-dimethylbenzoate, 3-fluoro-2-methylbenzoate, 2,3-difluorobenzoate, 2,6-difluorobenzoate, 2-fluoro-6-(trifluoromethyl)benzoate, 2-fluoro-3-(trifluoromethyl)benzoate, 2,6-bis(trifluoromethyl)benzoate, 2-chloro-6-fluorobenzoate, 2-chloro-6-fluorophenylacetate, 2,3-dichlorobenzoate, 2,6-dichlorobenzoate, 2,3-dimethoxybenzoate, 2,6-dimethoxybenzoate, 2-methyl-6-nitrobenzoate, 3-methyl-2-nitrobenzoate, 2-methyl-3-nitrobenzoate, 3-chloro-2-nitrobenzoate, 2-chloro-3-nitrobenzoate, 2-bromo-3-nitrobenzoate, 3-methoxy-2-nitrobenzoate, 3,4-dimethylbenzoate, 2,4-dimethylbenzoate, 2,5-dimethylbenzoate, 5-fluoro-2-methylbenzoate, 3-fluoro-4-methylbenzoate, 2-fluoro-5-methylbenzoate, 3-bromo-4-methylbenzoate, 2,4-bis(trifluoromethyl)benzoate, 3-iodo-4-methylbenzoate, 2-chloro-5-(trifluoromethyl)benzoate, 2,5-bis(trifluoromethyl)benzoate, 2,4-difluorobenzoate, 3,4-difluorobenzoate, 4-fluoro-2-(trifluoromethyl)benzoate, 2-fluoro-4-(trifluoromethyl)benzoate, 2-chloro-4-fluorobenzoate, 3-chloro-4-fluorobenzoate, 2,4-dichlorobenzoate, 3,4-dichlorobenzoate, 2,5-difluorobenzoate, 2,5-dichlorobenzoate, 3-bromo-4-fluorobenzoate, 5-bromo-2-chlorobenzoate, 3-methoxy-4-methylbenzoate, 3-fluoro-4-methoxybenzoate, 4-chloro-o-anisate, 5-chloro-o-anisate, 2-bromo-5-methoxybenzoate, 2,4-dimethoxybenzoate, 2,5-dimethoxybenzoate, 3,4-dimethoxybenzoate, 3,4-diethoxybenzoate, piperonylate, 2-chloro-5-(methylthio)benzoate, 2-methoxy-4-(methylthio)benzoate, 5-methyl-2-nitrobenzoate, 4-methyl-3-nitrobenzoate, 3-methyl-4-nitrobenzoate, 2-nitro-alpha,alpha,alpha-trifluoro-p-toluate, 2-fluoro-5-nitrobenzoate, 4-chloro-2-nitrobenzoate, 2-chloro-4-nitrobenzoate, 4-fluoro-3-nitrobenzoate, 4-chloro-3-nitrobenzoate, 5-chloro-2-nitrobenzoate, 2-chloro-5-nitrobenzoate, 2-bromo-5-nitrobenzoate, 4-(bromomethyl)-3-nitrobenzoate, 2-methoxy-4-nitrobenzoate, 4-methoxy-3-nitrobenzoate, 3-methoxy-4-nitrobenzoate, 5-methoxy-2-nitrobenzoate, 2,4-dinitrobenzoate, 3,5-dimethylbenzoate, 3,5-di-tert-butylbenzoate, 3,5-difluorobenzoate, 3,5-bis(trifluoromethyl)benzoate, 3,5-dichlorobenzoate, 3,5-dibromobenzoate, 3-bromo-5-iodobenzoate, 3,5-dimethoxybenzoate, 3,5-dinitrobenzoate, 2,3,4-trifluorobenzoate, 2,3,6-trifluorobenzoate, 2,4,6-trimethylbenzoate, 2,4,6-trifluorobenzoate, 3,4,5-trifluorobenzoate, 2,4,6-trichlorobenzoate, 2,3,5-trichlorobenzoate, 2, 3 , S-triiodobenzoate, 2-bromo-4,5-dimethoxybenzoate, 3,4,5-trimethoxybenzoate, 3,4,5-triethoxybenzoate, 4,5-dimethoxy-2-nitrobenzoate, 3,5-dinitro-o-toluate, 3,5-dinitro-p-toluate, 2-chloro-3,5-dinitrobenzoate, 4-chloro-3,5-dinitrobenzoate, 2,5-dichloro-3-nitrobenzoate, 2,6-dichloro-3-nitrobenzoate, 2,3,4-trimethoxybenzoate, 2, 4, 5-trifluorobenzoate, 2-chloro-4,5-difluorobenzoate, 2,4-dichloro-5-fluorobenzoate, 2,4,5-trimethoxybenzoate, 2,3,4,5-tetrafluorobenzoate, 2,3,5,6-tetrafluorobenzoate, 2, 4-dichloro-3, 5-dinitrobenzoate, 2, 3, 5, 6-tetrafluoro-p-toluate, 4-bromo-2, 3, 5, 6-tetrafluorobenzoate, pentafluorobenzoate, 2-biphenylcarboxylate, 4' -(trifluoromethyl)-2-biphenylcarboxylate, 4-biphenylcarboxylate, 4'-ethyl-4-biphenylcarboxylate, 4'-octyloxy-4-biphenylcarboxylate, alpha-phenyl-o-toluate, 2-bibenzylcarboxylate, 2,3,4,5,6-pentafluorophenoxyacetate, 2-phenoxybenzoate, 3-phenoxybenzoate, 2-benzoylbenzoate, 3-benzoylbenzoate, 4-benzoylbenzoate, 2-(4-fluorobenzoyl)benzoate, 2-(4-chlorobenzoyl)benzoate, 2-(4-chloro-3-nitrobenzoyl)benzoate, 1-naphthoate, 2-naphthoate, 4-fluoro-1-naphthoate, 2-ethoxy-1-naphthoate, 1, 8-naphthalaldehydate, naphthenate, 2-biphenylenecarboxylate, gamma-oxo-5-acenaphthenebutyrate, 9-fluorenecarboxylate, 1-fluorenecarboxylate, 4-fluorenecarboxylate, 9-fluorenone-1-carboxylate, 9-fluorenone-2-carboxylate, 9-fluarenone-4-carboxylate, 7-nitro-4-fluorenecarboxylate, chromone-2-carboxylate, 9-anthracenecarboxylate, anthraquinone-2-carboxylate, xanthene-9-carboxylate, 1-pyrenecarboxylate, and the like, dicarboxylic acid derived anions, such as malonate, methylmalonate, ethylmalonate, butylmalonate, dimethylmalonate, diethylmalonate, succinate, methylsuccinate, dimethylsuccinate, 2-ethyl-2-methylsuccinate, 2,3-dimethylsuccinate, glutarate, 2-methylglutarate, 3-methylglutarate, 2,2-dimethylglutarate, 3,3-dimethylglutarate, 2-ketoglutarate, adipate, 3-methyladipate, 3-tert-butyladipate, pimelate, suberate, azelate, sebacate, perfluorasebacate, 1,11-undecanedicarboxylate (⁻OOC(CH₂)₁₁COO⁻), undecanedioate (⁻OOC(CH₂)₉COO⁻), 1,10-decanedicarboxylate (⁻OOC(CH₂)₁₀COO⁻), 1,12-dodecanedicarboxylate (⁻OOC(CH₂)₁₂COO⁻), hexadecanedioate (⁻OOC(CH₂)₁₄COO⁻), docosanedioate (⁻OOC(CH₂)₂₀COO⁻), tetracosanedioate (⁻OOC(CH₂)₂₂COO⁻), itaconate, maleate, fumarate, citraconate, mesaconate, glutaconate, β-hydromuconate, traumatate, muconate, chlorosuccinate, bromosuccinate, 2,3-dibromosuccinate, tetrafluorosuccinate, hexafluoroglutarate, perfluoroadipate, perfluorosuberate, 3-chlorododecanedioate, dibromomaleate, diglycolate, 3,6-dioxaoctanedioate, thiodiglycolate, 3,3'-thiodipropionate, 1, 3-acetonedicarboxylate, 3-oxoadipate, 4-ketopimelate, 5-oxoazelate, ehelidonate, 1,2-cyclopentanedicarboxylate, 3,3-tetramethyleneglutarate, camphorate, cyclohexylsuccinate, 1,1-cyclohexanediacetate, 1,2-cyclohexanedicarboxylate, 1, 3-cyclohexanedicarboxylate, 1, 4-cyclohexanedicarboxylate, 1, 3-adamantanedicarboxylate, 1,3-adamantanediacetate, 5-norbornene-2,3-dicarboxylate, 1,4,5,6,7,7-hexachloro-5-norbornene-2,3-dicarboxylate, phenylsuccinate, 3-phenylglutarate, 1,2-phenylenediacetate, 1,2-phenylenedioxydiacetate, homophthalate, 1,3-phenylenediacetate, 4-carboxyphenoxyacetate, 1,4-phenylenediacetate, 1,4-phenylenedipropionate, 2-carboxycinnamate, 1,4-phenylenediacrylate, 2-carboxybenzenepropanoate, 4,4'-(hexafluoroisopropylidene)bis(benzoate), 4,4'-oxybis(benzoate), phthalate, isophthalate, terephthalate, 3-fluorophthalate, 2-methoxyisophthalate, 3-nitrophathalate, 4-methylphthalate, 2-bromoterephthalate, 4-bromoisophthalate, 4-nitrophthalate, nitroterephthalate, 5-tert-butylisophthalate, 5-octadecyloxyisophthalate, 5-nitroisophthalate, 4,5-dichlorophthalate, tetrafluoroterephthalate, tetrafluoroisophthalate, tetrafluorophthalate, diphenate, 4,4'-biphenyldicarboxylate, 4-[4-(2-carboxybenzoyl)phenyl]butyrate, 1, 4-naphthalenedicarboxylate, 2,3-naphthalenedicarboxylate, 2,6-naphthalenedicarboxylate, 2,7-di-tert-butyl-9,9-dimethyl-4,5-xanthenedicarboxylate, phenylmalonate, benzylmalonate, and the like, tricarboxylic acid derived anions, such as tricarballylate, of the formula

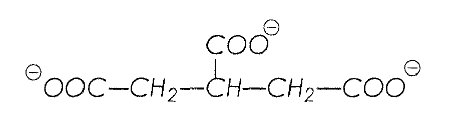

aconitate, nitromethanetrispropionate, 1,3,5-cyclohexanetricarboxylate, 1,3,5-trimethyl-1,3,5-cyclohexanetricarboxylate, 1,2,3-benzenetricarboxylate, 1,2,4-benzenetricarboxylate, 1,3,5-benzenetricarboxylate, 5-(4-carboxy-2-nitrophenoxyisophthalate, and the like, tetracarboxylic acid derived anions, such as 1,2,3,4-butanetetracarboxylate, tetrahydrofuran-2,3,4,5-tetracarboxylate, 2,2',2",2'"-[1,2-ethanediylidene-tetrakis(thio)]-tetrakisacetate, cyclobutanetetracarboxylate, 1, 2,4,5-benzenetetracarboxylate, 1,4,5,8-naphthalenetetracarboxylate, and the like monomeric compounds with higher degrees of carboxylate substitution, such as 1,2,3,4,5,6-cyclohexanehexacarboxylate, mellitate, and the like, sulfonic acid derived anions, such as methanesulfonate, ethanesulfonate, 1-propanesulfonate, 2-propanesulfonate, 1-butanesulfonate, 1-pentanesulfonate, 1-hexanesulfonate, 1-heptanesulfonate, 1-octanesulfonate, 1-nonanesulfonate, 1-decanesulfonate, 1-dodecanesulfonate, 1-tetradecanesulfonate, 1-hexadecanesulfonate, vinylsulfonate, 2-methyl-2-propene-1-sulfonate, trifluoromethanesulfonate, 2-chloroethanesulfonate, 2-bromoethanesulfonate, nonafluoro-1-butanesulfonate, perfluoro-1-octanesulfonate, PIPES, of the formula

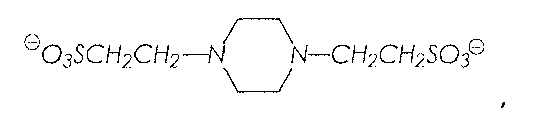

MES, of the formula

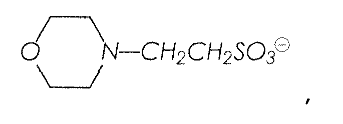

MOPS, of the formula

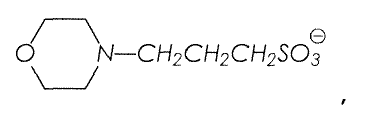

10-camphorsulfonate, 3-bromocamphor-8-sulfonate, 3-bromocamphor-10-sulfonate, 3-sulfopropylacrylate, 3-sulfopropylmethacrylate, dioctyl sulfosuccinate, p-toluene sulfonate, 4-ethylbenzenesulfonate, 4-chlorobenzenesulfonate, 2,4-dinitrobenzenesulfonate, 2-mesitylenesulfonate, 1-naphthalenesulfonate, 2-naphthalenesulfonate, 5-dimethylamino-1-naphthalenesulfonate, 1,5-naphthalene disulfonate, 4-sulfo-1,8-naphthalic anhydride salt, benzenesulfonate, xylenesulfonate, 4-octylbenzenesulfonate, dodecylbenzenesulfonate, 4-styrenesulfonate, 3-nitrobenzenesulfonate, 2-formylbenzenesulfonate, 4-acetylbenzenesulfonate, 4-sulfophenylisothiocyanate salt, 1, 2-benzenedisulfonate, 1, 3-benzenedisulfonate, 2-formyl-1, 3-benzenedisulfonate, 4-chloro-3-nitrobenzenesulfonate, 4,4'-diisothiocyanato-2,2'-distilbenesulfonate, pentafluorobenzenesulfonate, 1,2-naphthoquinone-4-sulfonate, 2, 6-naphthalenedisulfonate, 1, 3,6-naphthalenetrisulfonate, 1,3,7-naphthalenetrisulfonate, 9,10-dimethoxy-2-anthracenesulfonate, anthraquinone-2-sulfonate, anthraquinone-1,5-disulfonate, anthraquinone-2,6-disulfonate, and the like, compounds having both sulfonate groups and carboxylate groups, such as sulfoacetate, sulfosuccinate, 2-sulfobenzoate, 3-sulfobenzoate, 4-sulfobenzoate, 4-sulfophthalate, 5-sulfoisophthalate, dimethyl-5-sulfoisophthalate, and the like, diethyldithiocarbamate, and the like, as well as mixtures thereof.

Examples of sulfonates include, but are not limited to, for example, octylsulfate, decylsulfate, dodecylsulfate, octadecyllsulfate, among others.

Examples of waxy phosphates include, but are not limited to, for example, dimethylphosphinic acid, methylphosphonic acid, ethylphosphonic acid, propylphosphonic acid, t-butylphosphonic acid, methylenediphosphonic acid, vinylphosphonic acid, among others.

In a specific embodiment, the waxy anion can be a waxy organic dianion of the formula A₁₁-R₂₁-A₂₂ wherein A₁₁ and A₂₂ each, independently of the other, are anionic groups, such as carboxylate, sulfonate, or the like, and wherein R₂₁ is (i) an alkylene group (including linear, branched, saturated, unsaturated, cyclic, substituted, and unsubstituted alkylene groups, and wherein hetero atoms, such as oxygen, nitrogen, sulfur, silicon, phosphorus, and the like either may or may not be present in the alkylene group), in one embodiment with at least 1 carbon atoms, in another embodiment with at least about 4 carbon atoms, in yet another embodiment with at least about 6 carbon atoms, although the number of carbon atoms can be outside of these ranges, provided the counter ion is a waxy counter anion, (ii) an arylene group (including unsubstituted and substituted arylene groups, and wherein hetero atoms, such as oxygen, nitrogen, sulfur, silicon, phosphorus, and the like either may or may not be present in the arylene group), in one embodiment with at least about 6 carbon atoms, in another embodiment with at least about 10 carbon atoms, and in yet another embodiment with at least about 18 carbon atoms, etc., although the number of carbon atoms can be outside of these ranges, providing the counter ion is a waxy counter ion, (iii) an arylalkylene group (including unsubstituted and substituted arylalkylene groups, wherein the alkyl portion of the arylalkylene group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the arylalkylene group), in one embodiment with at least about 7 carbon atoms, in another embodiment with at least about 12 carbon atoms, and in yet another embodiment with at least about 18 carbon atoms, although the number of carbon atoms can be outside of these ranges, such as benzyl or the like, providing the counter ion is a waxy counter ion as described herein, or (iv) an alkylarylene group (including unsubstituted and substituted alkylarylene groups, wherein the alkyl portion of the alkylarylene group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the alkylarylene group), in one embodiment with at least about 7 carbon atoms, in another embodiment with at least about 12 carbon atoms, and in yet another embodiment with at least about 18 carbon atoms, although the number of carbon atoms can be outside of these ranges, providing the counter ion is a waxy counter ion, such as tolyl or the like, and wherein the substituents on the substituted alkylene, arylene, arylalkylene, and alkylarylene groups can be (but are not limited to) hydroxy groups, halogen atoms, amine groups, imine groups, ammonium groups, cyano groups, pyridine groups, pyridinium groups, ether groups, aldehyde groups, ketone groups, ester groups, amide groups, carbonyl groups, thiocarbonyl groups, sulfate groups, sulfide groups, sulfoxide groups, phosphine groups, phosphonium groups, phosphate groups, nitrile groups, mercapto groups, nitro groups, nitroso groups, sulfone groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring. Examples of suitable organic dianions include unsubstituted and substituted naphthalene disulfonates, unsubstituted and substituted benzene disulfonates, and the like, as well as mixtures thereof.

In another specific embodiment, the organic anion can be an organic trianion, tetraanion, and higher, an oligomeric or polymeric anion, such as a polysulfonate or polycarboxylate, or the like. Mixtures of two or more different anions can also be used.

In a specific embodiment, the waxy counter ion is dodecyl benzene sulfonate of the formula

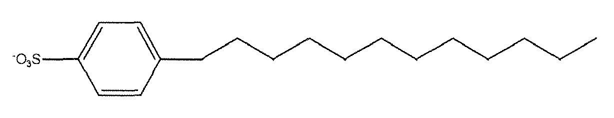

Colorants compounds for inks of the present disclosure can be prepared by any desired or effective procedure.

In embodiments, synthesis can comprise, for example, synthesis of a Leuco version of the colorant via a condensation step, oxidation of the Leuco version of the colorant, formation of the carbinol form of the basic dye, and formation of the final dye with a wax solubilizing counter-ion.

For example, the Leuco version of the colorant can be synthesized by condensation reaction of an aldehyde with an aniline having the desired pendant groups selected as defined for the colorant herein, heated, either neat or, optionally, in the presence of a solvent, after which an acid is added, for example concentrated H₂SO₄ with additional heating.

The aldehyde component and the aniline component are present in any desired or effective relative amounts, in one embodiment at least about 1 mole of aldehyde component per every 2 moles of aniline component, in another embodiment at least about 0.5 mole of aldehyde component per every 2 moles of aniline component, and in yet another embodiment at least about 0.9 mole of aldehyde component per every 2 moles of aniline component, and in one embodiment no more than about 1.9 moles of aldehyde component per every 2 moles of aniline component, in another embodiment no more than about 1.5 moles of aldehyde component per every 2 moles of aniline component, and in yet another embodiment no more than about 1.1 moles of aldehyde component per every 2 moles of aniline component, although the relative amounts can be outside of these ranges.

If desired, the reaction can be run neat, in the absence of a solvent. In addition, if desired, the reaction can be run in the presence of an optional solvent. Examples of suitable solvents include tetramethylene sulfone (sulfolane), N-methyl pyrrolidone, dimethyl formamide, dimethyl sulfoxide, octanol, or the like, as well as mixtures thereof. When present, the optional solvent is present in any desired or effective amount, in one embodiment at least about 1 liter per every 0.1 mole of aldehyde component, in another embodiment at least about 1 liter per every 0.3 mole of aldehyde component, and in yet another embodiment at least about 1 liter per every 0.35 mole of aldehyde component, and in one embodiment no more than about 1 liter per every 2 moles of aldehyde component, in another embodiment no more than about 1 liter per every 1.5 moles of aldehyde component, and in yet another embodiment no more than about 1 liter per every 1 mole of aldehyde component, although the relative amounts can be outside of these ranges.

The mixture of aldehyde component, aniline component, and optional solvent is then heated to any effective temperature, in one embodiment at least about 62°C, in another embodiment at least about 100°C, in another embodiment at least about 150 °C, and in yet another embodiment at least about 190°C, and in one embodiment no more than about 280°C, in another embodiment no more than about 220°C, and in yet another embodiment no more than about 200°C, although the temperature can be outside of these ranges.

The mixture of aldehyde component, aniline component, and optional solvent is heated for any effective period of time, in one embodiment at least about 5 minutes, in another embodiment at least about 2 hours, and in yet another embodiment at least about 3 hours, in yet another embodiment at least about 24 hours, and in one embodiment no more than about 4 days, in another embodiment no more than about 60 hours, and in yet another embodiment no more than about 40 hours, although the time can be outside of these ranges.

The product is then neutralized, for example with a NaOH solution, and collected, for example via vacuum filtration. The crude product can then, if desired, be purified, for example by washing with water.

The Leuco version of the colorant can then be oxidized for example by combining the Leuco version of the colorant with a suitable oxidizing agent heated, either neat or, optionally, in the presence of a solvent, for a period of time and at a temperature sufficient to assure complete oxidation of the Leuco form to the fully developed form.

Any suitable oxidizing agent can be selected in embodiments herein. For example, the oxidizing agent can be selected from the group consisting of, but not limited to, chloranil, benzoquinone, DDQ (2,3-dichloro-5,6-dicyano-1,4-benzoquinone), as well as other chlorinated quinines, MnO₂, PbO₂/HCl, and mixtures and combinations thereof. See, for example, U. S. Patent 5,013,857, which is hereby incorporated by reference herein in its entirety, which is not meant to limit the present disclosure or claims, entitled "Process for the preparation of sulpho-free triphenyl-methane dyestuffs."

The oxidizing agent can be selected in any suitable amount, for example, in embodiments, about 1 mole of oxidizing agent per every 1 mole of Leuco version of the colorant, at least about 1 mole of oxidizing agent component per every 2 moles of Leuco version of the colorant, in another embodiment at least about 0.5 mole of oxidizing agent per every 2 moles of Leuco version of the colorant, and in yet another embodiment at least about 0.9 mole of oxidizing agent per every 2 moles of Leuco version of the colorant, and in one embodiment no more than about 1.9 moles of oxidizing agent per every 2 moles of Leuco version of the colorant, in another embodiment no more than about 1.5 moles of oxidizing agent per every 2 moles of Leuco version of the colorant, and in yet another embodiment no more than about 1.1 moles of oxidizing agent per every 2 moles of Leuco version of the colorant, although the relative amounts can be outside of these ranges.

If desired, the reaction can be run neat, in the absence of a solvent. In addition, if desired, the reaction can be run in the presence of an optional solvent. Examples of suitable solvents include water, methanol, isopropanol, ethyl alcohol, tetramethylene sulfone (sulfolane), N-methyl pyrrolidone, dimethyl formamide, dimethyl sulfoxide, octanol, among others, or the like, as well as mixtures thereof. When present, the optional solvent is present in any desired or effective amount, in one embodiment at least about 1 liter per every 0.1 mole of Leuco version of the colorant, in another embodiment at least about 1 liter per every 0.3 mole of Leuco version of the colorant, and in yet another embodiment at least about 1 liter per every 0.35 mole of Leuco version of the colorant, and in one embodiment no more than about 1 liter per every 2 moles of Leuco version of the colorant, in another embodiment no more than about 1 liter per every 1.5 moles of Leuco version of the colorant, and in yet another embodiment no more than about 1 liter per every 1 mole of Leuco version of the colorant, although the relative amounts can be outside of these ranges.

After fully oxidizing the basic dye component, the carbinol form of the basic dye can be prepared, for example, by combining the oxidized form of the colorant and a hydroxide containing base with heating and stirring as suitable to achieve the carbinol form of the basic dye.

Any suitable hydroxide containing base can be selected in embodiments herein. For example, the hydroxide containing base can be selected from the group consisting of, but not limited to, metal hydroxides for example potassium hydroxide, lithium hydroxide, sodium hydroxide, calcium hydroxide, magnesium hydroxide, barium hydroxide, and mixtures and combinations thereof.

The oxidized form of the basic dye component and the hydroxide containing base are present in any desired or effective relative amounts, in one embodiment about 1 mole of the oxidized form of the basic dye per every 1 mole of the hydroxide containing base, in another embodiment, about 0.5 mole of the oxidized form of the basic dye per every about 1 mole of the hydroxide containing base, in another embodiment, about 0.75 mole of the oxidized form of the basic dye per every about 1 mole of the hydroxide containing base, although the relative amounts can be outside of these ranges.

The mixture of oxidized form of the basic dye and hydroxide containing base is heated for any effective period of time, in one embodiment at least about 5 minutes, in another embodiment at least about 2 hours, and in yet another embodiment at least about 3 hours, in yet another embodiment at least about 24 hours, and in one embodiment no more than about 4 days, in another embodiment no more than about 60 hours, and in yet another embodiment no more than about 40 hours, although the time can be outside of these ranges.

The product is then neutralized, for example with a NaOH solution, and collected, for example via vacuum filtration. The crude product can then, if desired, be purified, for example by washing with water.

The carbinol form of the basic dye and a selected wax solubilizing counter ion are combined in any desired or effective relative amounts, in one embodiment about equimolar amounts of each dye, although the relative amounts can be outside of these ranges, with solvent, and heated with stirring, until all of the solvent boiled off.

Examples of suitable solvents include, but are not limited to, for example, ethanol, water, methanol, isopropanol, butanol, tetramethylene sulfone (sulfolane), N-methyl pyrrolidone, dimethyl formamide, dimethyl sulfoxide, octanol, or the like, as well as mixtures and combinations thereof. When present, the solvent is present in any desired or effective amount, and additional solvent added as necessary to remove the water from the final product. For example, the solvent can be present in one embodiment in an amount of at least about 1 liter of solvent per every about 0.1 mole of carbinol version of the basic dye component, in another embodiment at least about 1 liter of solvent per every about 0.3 mole of carbinol version of the basic dye component, and in yet another embodiment at least about 1 liter of solvent per every 0.35 mole of carbinol version of the basic dye component, and in one embodiment no more than about 1 liter of solvent per every 2 moles of carbinol version of the basic dye component, in another embodiment no more than about 1 liter of solvent per every 1.5 moles of carbinol version of the basic dye component, and in yet another embodiment no more than about 1 liter of solvent per every 1 mole of carbinol version of the basic dye component, although the relative amounts can be outside of these ranges.

The mixture of carbinol form of the basic dye, waxy counter ion, and solvent is heated to any effective temperature, in one embodiment at least about 62°C, in another embodiment at least about 100°C, in another embodiment at least about 110 °C, in another embodiment at least about 150 °C, and in yet another embodiment at least about 190°C, and in one embodiment no more than about 280°C, in another embodiment no more than about 220°C, and in yet another embodiment no more than about 200°C, although the temperature can be outside of these ranges. Additional solvent can be added and the heating process repeated as necessary.

In embodiments, phase change inks disclosed herein include colorant compounds of the formula

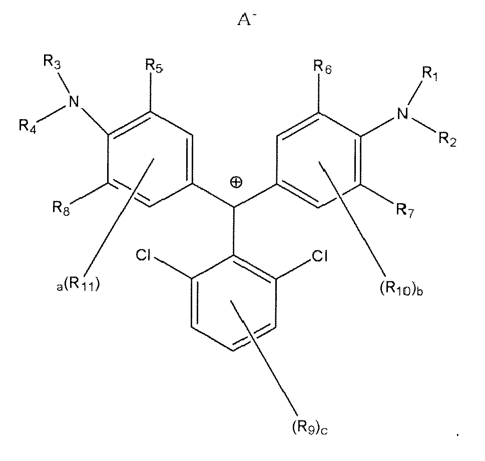

Various substituents can be placed on the rings of the colorants of the present disclosure by any desired or effective method, such as, for example, the methods disclosed in U.S. Patent 5,847,162 and U.S. Patent 1,991,482, the disclosures of each of which are totally incorporated herein by reference. See for example, U. S. Patent Application Serial Number 10/607,382, published January 20, 2005, and U. S. Patent 6,860,931, the disclosures of each of which are hereby incorporated by reference herein in their entireties.

Phase change inks of the present disclosure contain a phase change carrier system or composition. The phase change carrier composition is typically designed for use in either a direct printing mode or an indirect or offset printing transfer system.

In the direct printing mode, the phase change carrier composition in one embodiment contains one or more materials that enable the phase change ink (1) to be applied in a thin film of uniform thickness on the final recording substrate (such as paper, transparency material, and the like) when cooled to ambient temperature after printing directly to the recording substrate, (2) to be ductile while retaining sufficient flexibility so that the applied image on the substrate will not fracture upon bending, and (3) to possess a high degree of lightness, chroma, transparency, and thermal stability.

In an offset printing transfer or indirect printing mode, the phase change carrier composition in one embodiment exhibits not only the characteristics desirable for direct printing mode inks, but also certain fluidic and mechanical properties desirable for use in such a system, as described in, for example, U. S. Patent 5,389,958 the disclosure of which is totally incorporated herein by reference.

Any desired or effective carrier composition can be used. Examples of suitable ink carrier materials include fatty amides, such as monoamides, tetra-amides, mixtures thereof, and the like. Specific examples of suitable fatty amide ink carrier materials include stearyl stearamide, a dimer acid based tetra-amide that is the reaction product of dimer acid, ethylene diamine, and stearic acid, a dimer acid based tetra-amide that is the reaction product of dimer acid, ethylene diamine, and a carboxylic acid having at least about 36 carbon atoms, and the like, as well as mixtures thereof. When the fatty amide ink carrier is a dimer acid based tetra-amide that is the reaction product of dimer acid, ethylene diamine, and a carboxylic acid having at least about 36 carbon atoms, the carboxylic acid is of the general formula

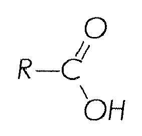

wherein R is an alkyl group, including linear, branched, saturated, unsaturated, and cyclic alkyl groups, said alkyl group in one embodiment having at least about 36 carbon atoms, in another embodiment having at least about 40 carbon atoms, said alkyl group in one embodiment having no more than about 200 carbon atoms, in another embodiment having no more than about 150 carbon atoms, and in yet another embodiment having no more than about 100 carbon atoms, although the number of carbon atoms can be outside of these ranges. Carboxylic acids of this formula are commercially available from, for example, Baker Petrolite, Tulsa, OK, and can also be prepared as described in Example 1 of U. S. Patent 6,174,937, the disclosure of which is totally incorporated herein by reference. Further information on fatty amide carrier materials is disclosed in, for example, U.S. Patent 4,889,560, U.S. Patent 4,889,761, U.S. Patent 5,194,638, U.S. Patent 4,830,671, U.S. Patent 6,174,937, U.S. Patent 5,372,852, U.S. Patent 5,597,856, U.S. Patent 6,174,937, and British Patent GB 2 238 792, the disclosures of each of which are totally incorporated herein by reference.

Also suitable as phase change ink carrier materials are isocyanate-derived resins and waxes, such as urethane isocyanate-derived materials, urea isocyanate-derived materials, urethane/urea isocyanate-derived materials, mixtures thereof, and the like. Further information on isocyanate-derived carrier materials is disclosed in, for example, U.S. Patent 5,750,604, U.S. Patent 5,780,528, U.S. Patent 5,782,966, U.S. Patent 5,783,658, U.S. Patent 5,827,918, U.S. Patent 5,830,942, U.S. Patent 5,919,839, U.S. Patent 6,255,432, U.S. Patent 6,309,453, U. S. Patent 6,525,161, British Patent GB 2 294 939, British Patent GB 2 305 928, PCT Publication WO 94/14902, PCT Publication WO 97/33943, and PCT Publication WO 95/04760, the disclosures of each of which are totally incorporated herein by reference.

Mixtures of fatty amide materials and isocyanate-derived materials can also be employed as the ink carrier composition for inks of the present disclosure.

Additional suitable phase change ink carrier materials for the present disclosure include paraffins, microcrystalline waxes, polyethylene waxes, ester waxes, amide waxes, fatty acids, fatty alcohols, fatty amides and other waxy materials, sulfonamide materials, resinous materials made from different natural sources (such as, for example, tall oil rosins and rosin esters), and many synthetic resins, oligomers, polymers and copolymers, such as ethylene/vinyl acetate copolymers, ethylene/acrylic acid copolymers, ethylene/vinyl acetate/acrylic acid copolymers, copolymers of acrylic acid with polyamides, and the like, ionomers, and the like, as well as mixtures thereof. One or more of these materials can also be employed in a mixture with a fatty amide material and/or an isocyanate-derived material.

In one specific embodiment, the phase change ink carrier comprises (a) a polyethylene wax, present in the ink in an amount in one embodiment of at least about 25 percent by weight of the ink, in another embodiment of at least about 30 percent by weight of the ink, and in yet another embodiment of at least about 37 percent by weight of the ink, and in one embodiment of no more than about 60 percent by weight of the ink, in another embodiment of no more than about 53 percent by weight of the ink, and in yet another embodiment of no more than about 48 percent by weight of the ink, although the amount can be outside of these ranges; (b) a stearyl stearamide wax, present in the ink in an amount in one embodiment of at least about 8 percent by weight of the ink, in another embodiment of at least about 10 percent by weight of the ink, and in yet another embodiment of at least about 12 percent by weight of the ink, and in one embodiment of no more than about 32 percent by weight of the ink, in another embodiment of no more than about 28 percent by weight of the ink, and in yet another embodiment of no more than about 25 percent by weight of the ink, although the amount can be outside of these ranges; (c) a dimer acid based tetra-amide that is the reaction product of dimer acid, ethylene diamine, and a long chain hydrocarbon having greater than thirty six carbon atoms and having a terminal carboxylic acid group, present in the ink in an amount in one embodiment of at least about 10 percent by weight of the ink, in another embodiment of at least about 13 percent by weight of the ink, and in yet another embodiment of at least about 16 percent by weight of the ink, and in one embodiment of no more than about 32 percent by weight of the ink, in another embodiment of no more than about 27 percent by weight of the ink, and in yet another embodiment of no more than about 22 percent by weight of the ink, although the amount can be outside of these ranges; (d) a urethane resin derived from the reaction of two equivalents of hydroabietyl alcohol and one equivalent of isophorone diisocyanate, present in the ink in an amount in one embodiment of at least about 6 percent by weight of the ink, in another embodiment of at least about 8 percent by weight of the ink, and in yet another embodiment of at least about 10 percent by weight of the ink, and in one embodiment of no more than about 16 percent by weight of the ink, in another embodiment of no more than about 14 percent by weight of the ink, and in yet another embodiment of no more than about 12 percent by weight of the ink, although the amount can be outside of these ranges; (e) a urethane resin that is the adduct of three equivalents of stearyl isocyanate and a glycerol-based propoxylate alcohol, present in the ink in an amount in one embodiment of at least about 2 percent by weight of the ink, in another embodiment of at least about 3 percent by weight of the ink, and in yet another embodiment of at least about 4.5 percent by weight of the ink, and in one embodiment of no more than about 13 percent by weight of the ink, in another embodiment of no more than about 10 percent by weight of the ink, and in yet another embodiment of no more than about 7.5 percent by weight of the ink, although the amount can be outside of these ranges; and (f) an antioxidant, present in the ink in an amount in one embodiment of at least about 0.01 percent by weight of the ink, in another embodiment of at least about 0.05 percent by weight of the ink, and in yet another embodiment of at least about 0.1 percent by weight of the ink, and in one embodiment of no more than about 1 percent by weight of the ink, in another embodiment of no more than about 0.5 percent by weight of the ink, and in yet another embodiment of no more than about 0.3 percent by weight of the ink, although the amount can be outside of these ranges.

The ink carrier is present in the phase change ink of the present disclosure in any desired or effective amount, in one embodiment of at least about 0.1 percent by weight of the ink, in another embodiment of at least about 50 percent by weight of the ink, and in yet another embodiment of at least about 90 percent by weight of the ink, and in one embodiment of no more than about 99 percent by weight of the ink, in another embodiment of no more than about 98 percent by weight of the ink, and in yet another embodiment of no more than about 95 percent by weight of the ink, although the amount can be outside of these ranges.

The phase change inks of the present disclosure contain a colorant compound for example in embodiments a colorant compound of the formula

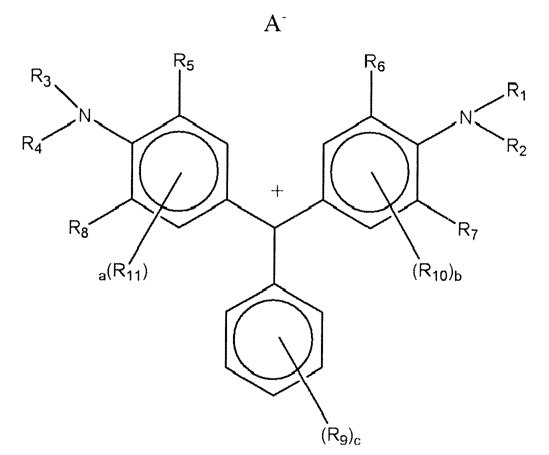

This colorant is present in the ink in any desired or effective amount to obtain the desired color or hue, in one embodiment, in an amount of at least about 0.1 percent by weight of the ink, in another embodiment of at least about 0.5 percent by weight of the ink, in yet another embodiment of at least about 1 percent by weight of the ink, in still another embodiment of at least about 2 percent by weight of the ink, and in another embodiment of at least about 3 percent by weight of the ink, and in one embodiment of no more than about 20 percent by weight of the ink, in another embodiment of no more than about 13 percent by weight of the ink, and in yet another embodiment of no more than about 6 percent by weight of the ink, although the amount can be outside of these ranges. The colorant according to the present disclosure can either be the sole colorant in the ink or can be present in combination with other colorants, such as dyes, pigments, mixtures thereof, and the like.

In specific embodiments, the inks of the present disclosure further contain an acid having a Ka value greater than that of the Ka of the carboxylic acid and/or sulfonic acid and/or carboxylate and/or sulfonate groups on the colorant. Specific examples of suitable acids include organic sulfonic acids, including alkyl benzene sulfonic acids such as para-toluene-sulfonic acid, dodecylbenzenesulfonic acid, and the like, p-toluene sulfonic acid, hydrochloric acid, trifluoroacetic acid, methylsulfonic acid, trifluoromethyl sulfonic acid, hydrobromic acid, and the like, as well as mixtures thereof. The acid is present in any desired or effective amount, in one embodiment at least about 2 percent by weight of the amount of colorant according to the present disclosure, and in another embodiment at least about 5 percent by weight of the amount of colorant according to the present disclosure, and in one embodiment no more than about 100 percent by weight of the amount of the colorant according to the present disclosure, and in another embodiment no more than about 30 percent by weight of the colorant according to the present disclosure, although the amount of acid can be outside of these ranges.

The inks of the present disclosure can also optionally contain an antioxidant. The optional antioxidants of the ink compositions protect the images from oxidation and also protect the ink components from oxidation during the heating portion of the ink preparation process. Specific examples of suitable antioxidants include NAUGUARD® 524, NAUGUARD® 76, and NAUGUARD® 512 (commercially available from Uniroyal Chemical Company, Oxford, CT), IRGANOX® 1010 (commercially available from Ciba Geigy), and the like. When present, the optional antioxidant is present in the ink in any desired or effective amount, in one embodiment of at least about 0.01 percent by weight of the ink, in another embodiment of at least about 0.1 percent by weight of the ink, and in yet another embodiment of at least about 1 percent by weight of the ink, and in one embodiment of no more than about 20 percent by weight of the ink, in another embodiment of no more than about 5 percent by weight of the ink, and in yet another embodiment of no more than about 3 percent by weight of the ink, although the amount can be outside of these ranges.

The inks of the present disclosure can also optionally contain a viscosity modifier. Examples of suitable viscosity modifiers include aliphatic ketones, such as stearone, and the like. When present, the optional viscosity modifier is present in the ink in any desired or effective amount, in one embodiment of at least about 0.1 percent by weight of the ink, in another embodiment of at least about 1 percent by weight of the ink, and in yet another embodiment of at least about 10 percent by weight of the ink, and in one embodiment of no more than about 99 percent by weight of the ink, in another embodiment of no more than about 30 percent by weight of the ink, and in yet another embodiment of no more than about 15 percent by weight of the ink, although the amount can be outside of these ranges.

Other optional additives to the inks include clarifiers, such as UNION CAMP® X37-523-235 (commercially available from Union Camp), in an amount in one embodiment of at least about 0.01 percent by weight of the ink, in another embodiment of at least about 0.1 percent by weight of the ink, and in yet another embodiment of at least about 5 percent by weight of the ink, and in one embodiment of no more than about 98 percent by weight of the ink, in another embodiment of no more than about 50 percent by weight of the ink, and in yet another embodiment of no more than about 10 percent by weight of the ink, although the amount can be outside of these ranges, tackifiers, such as FORAL® 85, a glycerol ester of hydrogenated abietic (rosin) acid (commercially available from Hercules), FORAL® 105, a pentaerythritol ester of hydroabietic (rosin) acid (commercially available from Hercules), CELLOLYN® 21, a hydroabietic (rosin) alcohol ester of phthalic acid (commercially available from Hercules), ARAKAWA KE-311 Resin, a triglyceride of hydrogenated abietic (rosin) acid (commercially available from Arakawa Chemical Industries, Ltd.), synthetic polyterpene resins such as NEVTAC® 2300, NEVTAC® 100, and NEVTAC® 80 (commercially available from Neville Chemical Company), WTNGTACK® 86, a modified synthetic polyterpene resin (commercially available from Goodyear), and the like, in an amount in one embodiment of at least about 0.1 percent by weight of the ink, in another embodiment of at least about 5 percent by weight of the ink, and in yet another embodiment of at least about 10 percent by weight of the ink, and in one embodiment of no more than about 98 percent by weight of the ink, in another embodiment of no more than about 75 percent by weight of the ink, and in yet another embodiment of no more than about 50 percent by weight of the ink, although the amount can be outside of these range, adhesives, such as VERSAMID® 757, 759, or 744 (commercially available from Henkel), in an amount in one embodiment of at least about 0.1 percent by weight of the ink, in another embodiment of at least about 1 percent by weight of the ink, and in yet another embodiment of at least about 5 percent by weight of the ink, and in one embodiment of no more than about 98 percent by weight of the ink, in another embodiment of no more than about 50 percent by weight of the ink, and in yet another embodiment of no more than about 10 percent by weight of the ink, although the amount can be outside of these ranges, plasticizers, such as UNIPLEX® 250 (commercially available from Uniplex), the phthalate ester plasticizers commercially available from Monsanto under the trade name SANTICIZER®, such as dioctyl phthalate, diundecyl phthalate, alkylbenzyl phthalate (SANTICIZER® 278), triphenyl phosphate (commercially available from Monsanto), KP-140®, a tributoxyethyl phosphate (commercially available from FMC Corporation), MORFLEX® 150, a dicyclohexyl phthalate (commercially available from Morflex Chemical Company Inc.), trioctyl trimellitate (commercially available from Eastman Kodak Co.), and the like, in an amount in one embodiment of at least about 0.1 percent by weight of the ink, in another embodiment of at least about 1 percent by weight of the ink, and in yet another embodiment of at least about 2 percent by weight of the ink, and in one embodiment of no more than about 50 percent by weight of the ink, in another embodiment of no more than about 30 percent by weight of the ink, and in yet another embodiment of no more than about 10 percent by weight of the ink, although the amount can be outside of these ranges, and the like.

The ink compositions of the present disclosure in one embodiment have melting points of no lower than about 50°C, in another embodiment of no lower than about 70°C, and in yet another embodiment of no lower than about 80°C, and have melting points in one embodiment of no higher than about 160°C, in another embodiment of no higher than about 140°C, and in yet another embodiment of no higher than about 100°C, although the melting point can be outside of these ranges.

The ink compositions of the present disclosure generally have melt viscosities at the jetting temperature (in one embodiment no lower than about 75°C, in another embodiment no lower than about 100°C, and in yet another embodiment no lower than about 120°C, and in one embodiment no higher than about 180°C, and in another embodiment no higher than about 150°C, although the jetting temperature can be outside of these ranges) in one embodiment of no more than about 30 centipoise, in another embodiment of no more than about 20 centipoise, and in yet another embodiment of no more than about 15 centipoise, and in one embodiment of no less than about 2 centipoise, in another embodiment of no less than about 5 centipoise, and in yet another embodiment of no less than about 7 centipoise, although the melt viscosity can be outside of these ranges.

The ink compositions of the present disclosure can be prepared by any desired or suitable method. For example, the ink ingredients can be mixed together, followed by heating, to a temperature in one embodiment of at least about 100°C, and in one embodiment of no more than about 140°C, although the temperature can be outside of these ranges, and stirring until a homogeneous ink composition is obtained, followed by cooling the ink to ambient temperature (typically from about 20 to about 25°C) . The inks of the present disclosure are solid at ambient temperature. In a specific embodiment, during the formation process, the inks in their molten state are poured into molds and then allowed to cool and solidify to form ink sticks.

The inks of the present disclosure can be employed in apparatus for direct printing ink jet processes and in indirect (offset) printing ink jet applications. Another embodiment of the present disclosure is directed to a process which comprises incorporating an ink of the present disclosure into an ink jet printing apparatus, melting the ink, and causing droplets of the melted ink to be ejected in an imagewise pattern onto a recording substrate. A direct printing process is also disclosed in, for example, U.S. Patent 5,195,430, the disclosure of which is totally incorporated herein by reference. Yet another embodiment of the present disclosure is directed to a process which comprises incorporating an ink of the present disclosure into an ink jet printing apparatus, melting the ink, causing droplets of the melted ink to be ejected in an imagewise pattern onto an intermediate transfer member, and transferring the ink in the imagewise pattern from the intermediate transfer member to a final recording substrate. In a specific embodiment, the intermediate transfer member is heated to a temperature above that of the final recording sheet and below that of the melted ink in the printing apparatus. An offset or indirect printing process is also disclosed in, for example, U.S. Patent 5,389,958, the disclosure of which is totally incorporated herein by reference. In one specific embodiment, the printing apparatus employs a piezoelectric printing process wherein droplets of the ink are caused to be ejected in imagewise pattern by oscillations of piezoelectric vibrating elements. Inks of the present disclosure can also be employed in other hot melt printing processes, such as hot melt acoustic ink jet printing, hot melt thermal ink jet printing, hot melt continuous stream or deflection ink jet printing, and the like. Phase change inks of the present disclosure can also be used in printing processes other than hot melt ink jet printing processes.

Any suitable substrate or recording sheet can be employed, including plain papers such as XEROX® 4024 papers, XEROX® Image Series papers, Courtland 4024 DP paper, ruled notebook paper, bond paper, silica coated papers such as Sharp Company silica coated paper, JuJo paper, HAMMERMILL LASERPRINT® paper, and the like, transparency materials, fabrics, textile products, plastics, polymeric films, inorganic substrates such as metals and wood, and the like.

### EXAMPLES

The following Examples are being submitted to further define various species of the present disclosure. These Examples are intended to be illustrative only and are not intended to limit the scope of the present disclosure. Also, parts and percentages are by weight unless otherwise indicated.

### Example 1

### Part A: Synthesis of the Leuco Version of the Dye

### (Tetramethyl Adduct with DDBSA Counter-Anion)

About 25.0 grams of 2,6-dimethyl aniline of the formula

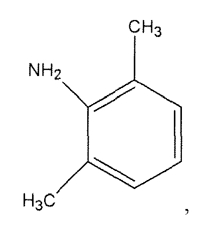

17.5 grams of 2,6-dichloro benzaldehyde of the formula

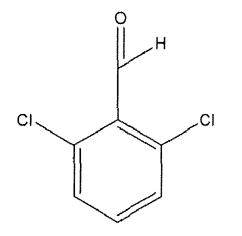

and 50 grams of deionized water were added to a 150 milliliter 1-neck round bottom flask equipped with a Teflon® coated magnet, condenser, and oil bath. The contents were mixed and 12 milliliters of concentrated H₂SO₄ were added to the mixed contents. The flask was placed in a 100 °C oil bath and allowed to stir and heat. After about 24 hours of heating, the crude product was poured into a 1 liter beaker containing 500 milliliters of ice water, stirred for about 30 minutes, and allowed to set overnight. The product mixture was then neutralized with about 30 milliliters of 40 % NaOH and collected via vacuum filtration. The tan solid was washed with about 500 milliliters of water, reslurried in about 500 milliliters of water, and this process of washing and reslurrying was repeated. The filtered solids were then allowed to dry. The Leuco (colorless) version of the basic dye produced is believed to be of the formula

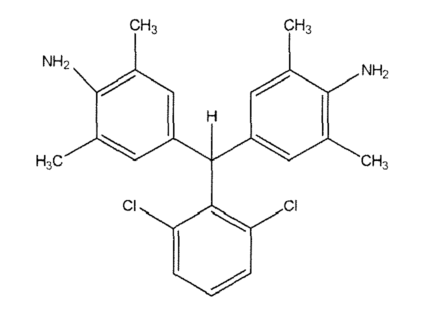

### Example 1

### Part B: Oxidation of the Leuco Version of the Dye

About 10.0 grams of the solid collected in Example 1, Part A, was added to a 500 milliliter 1-neck round bottom flask equipped with a Teflon® coated magnet, condenser and oil bath. 40 milliliters of ethyl alcohol and 4.75 grams of chloranil (an oxidizing agent) were added and the flask was placed in a 70 C oil bath with stirring. A blue color began to develop immediately and deepen with time. The flask was heated for about 2 hours to insure complete oxidation of the Leuco form of the dye to the fully developed form, believed to be of the formula

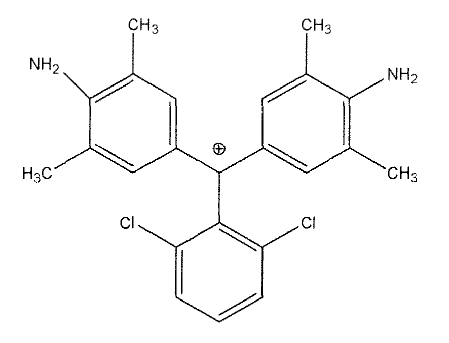

### Example 1

### Part C: Formation of the Carbinol Form of the Dye

After the reaction mixture had been fully oxidized, as outlined in Example 1, Part B, the pH was made alkaline by the addition of about 25 milliliters of 40 % NaOH. The blue color immediately disappeared indicating the formation of the carbinol form of the dye. Heating and stirring was continued for about 5 additional minutes. The crude product was poured into a 1000 milliliter beaker containing 250 milliliters of water and 2.5 grams of 40 % NaOH and allowed to set overnight. About 9.62 grams of the carbinol form of the dye were obtained, believed to be of the formula

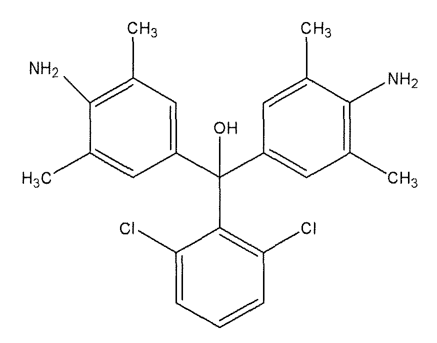

### Example 1

### Part D: Formation of the Final Dye With a Wax Solubilizing Counter-Ion

About 4.64 grams of the carbinol form of the dye from Example 1, Part C, 3.6 grams of the free acid form of DDBSA (dodecyl benzene sulfonic acid) believed to be of the formula

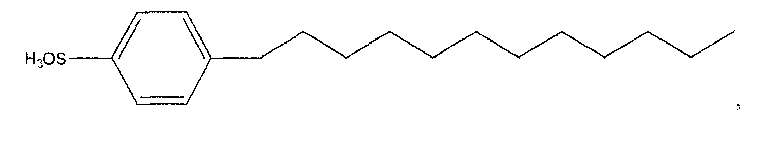

And about 300 milliliters of ethanol were added to a 500 milliliter beaker equipped with a Teflon® coated magnet, condenser and oil bath. The mixture was stirred and heated in a 100 °C oil bath until all of the ethanol and water boiled off leaving a gooey blue solid comprising the final dye with a wax solubilizing counter DDBSA counter-ion believed to be of the formula

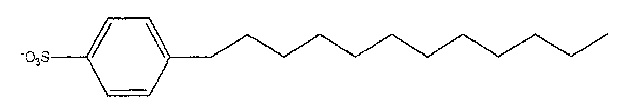

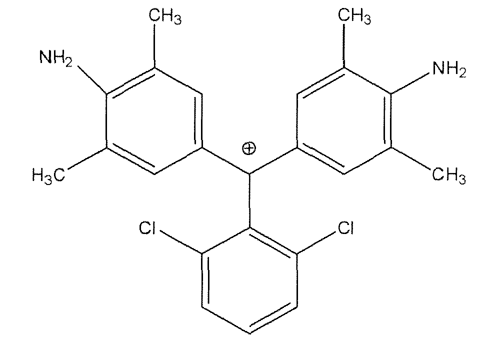

### Example 1

### Part E: Formation of the Final Dye With

### A Non-Wax Solubilizing Counter-Ion

About 5.0 grams of the carbinol form of the dye from Example 1, Part C and about 100 milliliters of deionized water were added to a 250 milliliter beaker equipped with a stirrer. The mixture was stirred and H₃PO₄ was added until the mixture was acidic (pH about 3). The mixture was transferred to a 600 milliliter 1-neck round bottom flask equipped with a distillation column and Teflon® coated stir magnet. 250 milliliters of toluene were added and the water was azeotroped off leaving a dye that is soluble in the toluene solvent (but insoluble in a hot melt ink base). The dye was filtered and collected and is believed to be of the formula

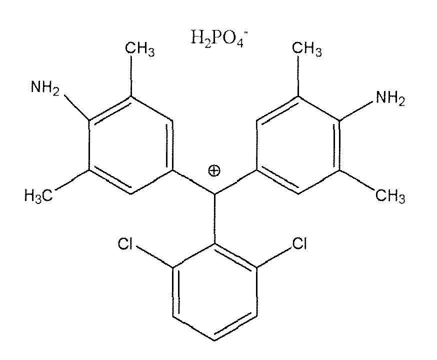

### Example 1

### Part F: Formation of the Final Dye With a Wax Solubilizing Counter-Ion

About 4.64 grams of the carbinol form of the dye from Example 1, Part C, about 2.58 grams of the free acid form of p-OBA (para-octyl benzoic acid) believed to be of the formula

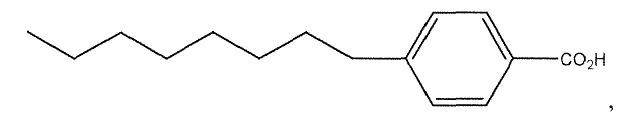

and about 300 milliliters of ethanol is added to a 500 milliliter beaker equipped with a Teflon® coated magnet, condenser and oil bath. The mixture is stirred and heated in a 100 °C oil bath until all of the ethanol and water boils off leaving a blue solid comprising the final dye with a wax solubilizing counter DDBSA counter-ion believed to be of the formula

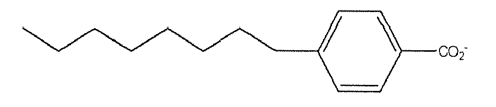

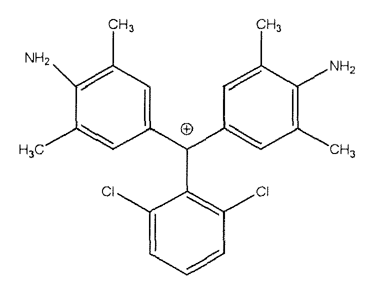

### Example 1

### Part G: Formation of the Final Dye With a Wax Solubilizing Counter-Ion

About 4.64 grams of the carbinol form of the dye from Example 1, Part C, about 8.10 grams of the acid form of X-1070 (Phosphate ester available from the Baker Petrolite Corp.) believed to be of the formula

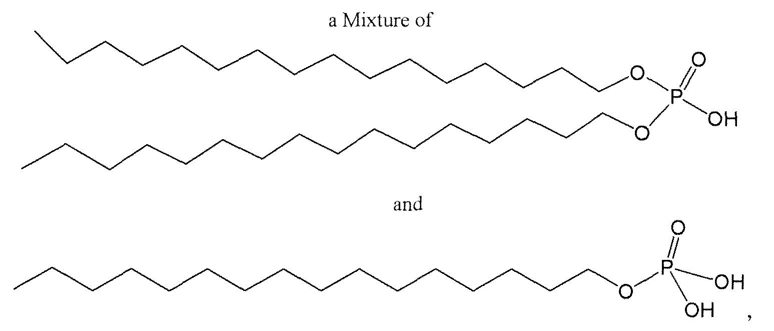

and about 300 milliliters of butanol is added to a 500 milliliter beaker equipped with a Teflon® coated magnet, condenser and oil bath. The mixture is stirred and heated in a 120 °C oil bath until all of the butanol and water boils off leaving a blue solid comprising the final dye with a wax solubilizing counter DDBSA counter-ion believed to be of the formula:

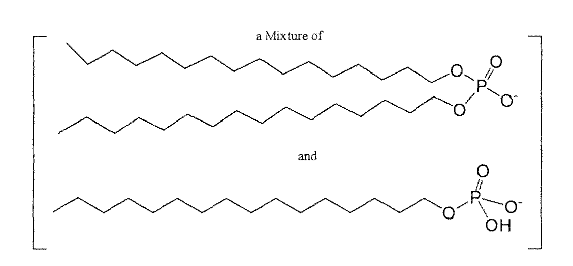

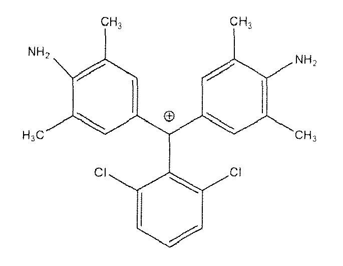

### Example 2

### Part A: Synthesis of the Leuco Version of the Dye

About 30.8 grams of 2,6-diethyl aniline of the formula

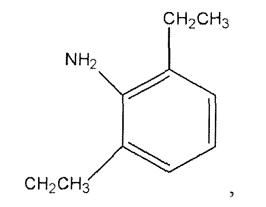

17.5 grams of 2,6-dichloro benzaldehyde of the formula

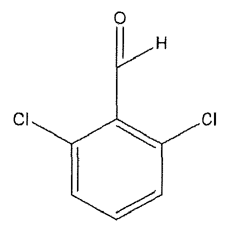

and 50 grams of deionized water were added to a 150 milliliter 1-neck round bottom flask equipped with a Teflon® coated magnet, condenser, and oil bath. The contents were mixed and 12 milliliters of concentrated H₂SO₄ were added to the mixed contents. The flask was placed in a 100 °C oil bath and allowed to stir and heat. After about 24 hours of heating, the crude product was poured into a 1 liter beaker containing 500 milliliters of ice water, stirred for about 30 minutes, and allowed to set overnight. The product mixture was then neutralized with about 30 milliliters of 40 % NaOH and collected via vacuum filtration. The tan solid was washed with about 500 milliliters of water, reslurried in about 500 milliliters of water, and this process of washing and reslurrying was repeated. The filtered solids were then allowed to dry. The Leuco (colorless) version of the basic dye produced is believed to be of the formula

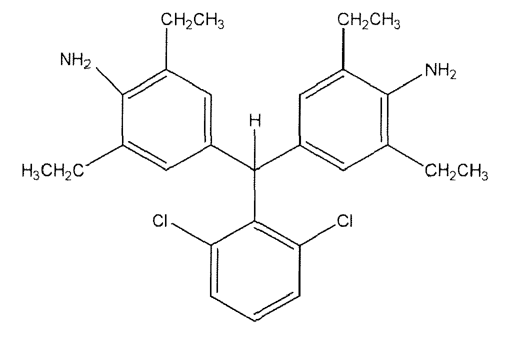

### Example 2

### Part B: Oxidation of the Leuco Version of the Dye

The solid collected in Example 2, Part A, was added to a 500 milliliter 1-neck round bottom flask equipped with a Teflon® coated magnet, condenser and oil bath. 250 milliliters of ethyl alcohol and 25 grams of chloranil (an oxidizing agent) were added and the flask was placed in a 70 °C oil bath with stirring. A blue color began to develop immediately and deepen with time. The flask was heated for about 2 hours to insure complete oxidation of the Leuco form of the dye to the fully developed form, believed to be of the formula

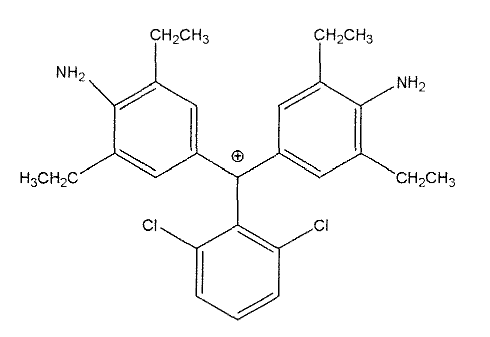

### Example 2

### Part C: Formation of the Carbinol Form of the Dye

After the reaction mixture had been fully oxidized, as outlined in Example 2, Part B, the pH was made alkaline by the addition of about 25 milliliters of 40 % NaOH. The blue color immediately disappeared indicating the formation of the carbinol form of the dye. Heating and stirring was continued for about 5 additional minutes. The crude product was poured into a 1000 milliliter beaker containing 250 milliliters of water and 5 grams of 40 % NaOH and allowed to set overnight. The carbinol form of the dye obtained is believed to be of the formula

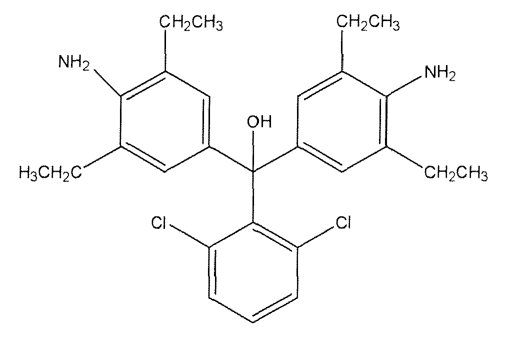

### Example 2

### Part D: Formation of the Final Dye With a Wax Solubilizing Counter-Ion

After the reaction mixture from Example 2, Part C had been allowed to set and settle overnight, it was observed that the product had settled on the bottom of the flask as a sticky solid. The liquid was decanted off and slurried with water several times, decanting off the water after each slurry. The product was collected as a wet cake. Half of the wet cake was transferred to a 1000 milliliter beaker equipped with a Teflon® coated magnet, condenser and oil bath. About 400 milliliters of ethyl alcohol and 15.0 grams of the free acid form of dodecyl benzene sulfonic acid believed to be of the formula

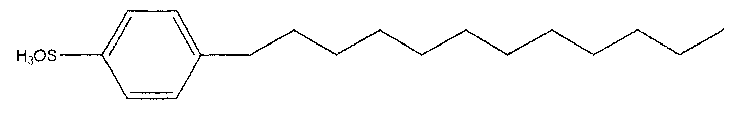

was added. The mixture was stirred and heated in a 110 °C oil bath until all of the ethanol and water boiled off leaving a gooey blue solid comprising the final dye with a wax solubilizing counter DDBSA counter-ion believed to be of the formula

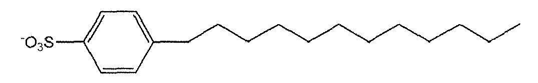

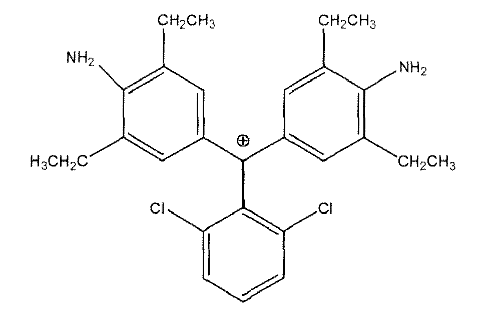

### Example 3

### Part A: Synthesis of the Leuco Version of the Dye

About 28.0 grams of 2,6-diisopropyl aniline of the formula

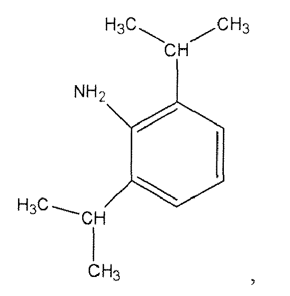

13.4 grams of 2,6-dichloro benzaldehyde of the formula

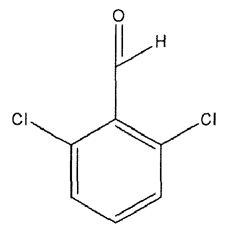

and 38.3 grams of deionized water were added to a 150 milliliter 1-neck round bottom flask equipped with a Teflon® coated magnet, condenser, and oil bath. The contents were mixed and 16.5 grams of concentrated H₂SO₄ were added to the mixed contents. The flask was placed in a 100 °C oil bath and allowed to stir and heat. After about 24 hours of heating, the crude product was poured into a 1 liter beaker containing 500 milliliters of ice water, stirred for about 30 minutes, and allowed to set overnight. The product mixture was then neutralized with about 30 milliliters of 40 % NaOH and collected via vacuum filtration. The tan solid was washed with about 500 milliliters of water, reslurried in about 500 milliliters of water, and this process of washing and reslurrying was repeated. The filtered solids were then allowed to dry. About 38.2 grams of the tan solid were collected. The Leuco (colorless) version of the basic dye produced is believed to be of the formula

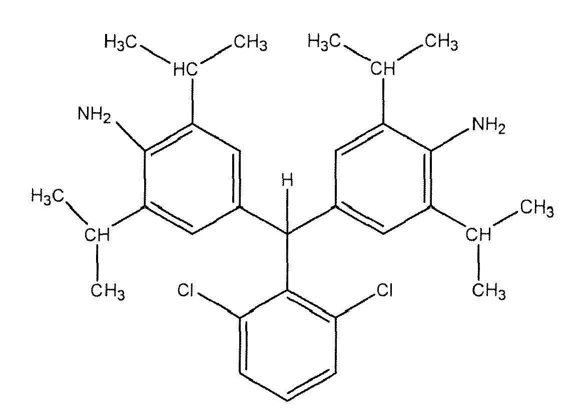

### Example 3

### Part B: Oxidation of the Leuco Version of the Dye

About 12. 25 grams of the solid collected in Example 3, Part A, was added to a 500 milliliter 1-neck round bottom flask equipped with a Teflon® coated magnet, condenser and oil bath. 50 milliliters of ethyl alcohol and 5.0 grams of chloranil (an oxidizing agent) were added and the flask was placed in a 70 °C oil bath with stirring. A blue color began to develop immediately and deepen with time. The flask was heated for about 2 hours to insure complete oxidation of the Leuco form of the dye to the fully developed form, believed to be of the formula

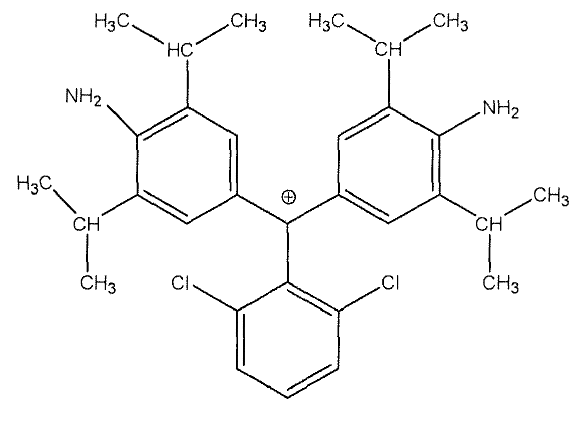

### Example 3

### Part C: Formation of the Carbinol Form of the Dye

After the reaction mixture had been fully oxidized, as outlined in Example 3, Part B, the pH was made alkaline by the addition of about 5.5 milliliters of 40 % NaOH. The blue color immediately disappeared indicating the formation of the carbinol form of the dye. Heating and stirring was continued for about 5 additional minutes. The crude product was poured into a 1000 milliliter beaker containing 150 milliliters of water and 52. grams of 40 % NaOH and allowed to set overnight. The carbinol form of the dye obtained is believed to be of the formula

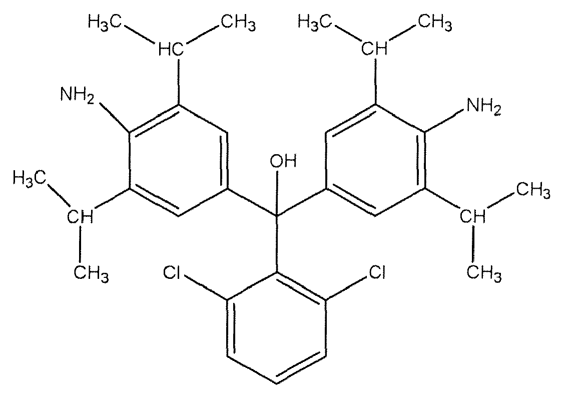

### Example 3

### Part D: Formation of the Final Dye With a Wax Solubilizing Counter-Ion

After the reaction mixture from Example 3, Part C had been allowed to set and settle overnight, it was observed that the product had settled on the bottom of the flask as a sticky solid. The liquid was decanted off. About 500 milliliters of ethyl alcohol and 7.4 grams of the free acid form of dodecyl benzene sulfonic acid of the formula

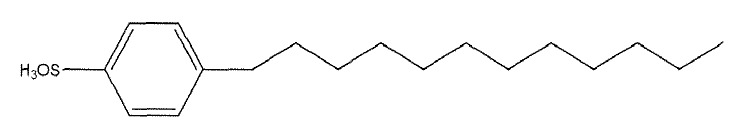

was added. The mixture was stirred and heated in a 110 °C oil bath until all of the ethanol and water boiled off leaving a gooey blue solid comprising the final dye with a wax solubilizing DDBSA counter-ion believed to be of the formula

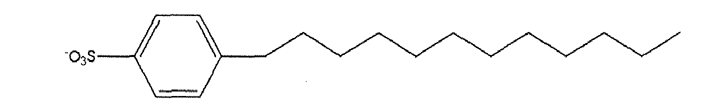

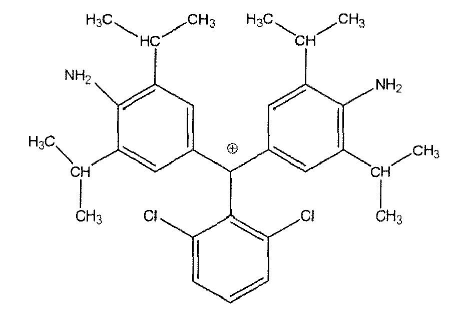

### Example 4

### Part A: Synthesis of the Leuco Version of the Basic Dye

About 29.8 grams of N,N-diethylamino aniline of the formulae

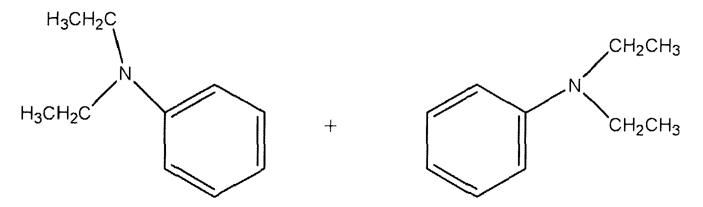

about 17.7 grams of 4-diethylamino benzaldehyde of the formula

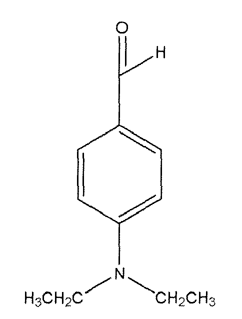

and 100 grams of deionized water were added to a 150 milliliter 1-neck round bottom flask equipped with a Teflon® coated magnet, condenser, and oil bath. The contents were mixed and 21.6 grams of concentrated H₂SO₄ were added. The flask was placed in a 100 °C oil bath and allowed to stir and heat. After about 24 hours of heating, the crude product was poured into a 1 liter beaker containing 500 milliliters of ice water and stirred for about 30 minutes and allowed to set overnight. The product mixture was then neutralized with 40% NaOH (about 30 milliliters) and collected via vacuum filtration. The tan solid was washed with about 500 milliliters of water, reslurried in about 500 milliliters of water, filtered, and this processed was repeated. The filtered solids were then allowed to dry. The Leuco (colorless) version of the basic dye produced is believed to be of the formula

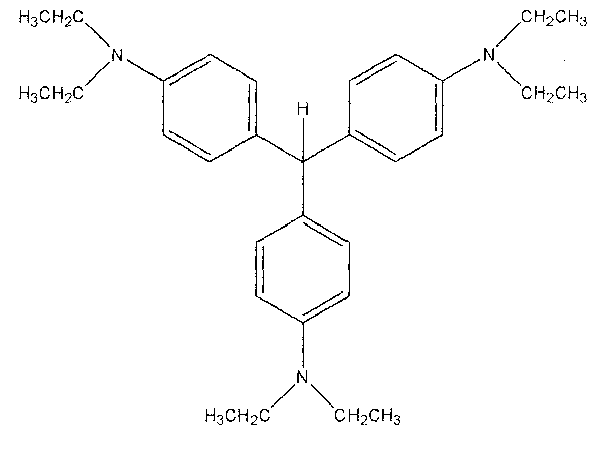

### Example 4

### Part B: Oxidation of the Leuco Version of the Basic Dye

The solid collected in Example 2, Part A, 150 milliliters of ethyl alcohol, and 25 grams of chloranil (an oxidizing agent) were added to a 150 milliliter 1-neck round bottom flask equipped with a Teflon® coated magnet, condenser, and oil bath. The flask was placed in a 70 °C oil bath with stirring. A blue color began to develop immediately and deepen with time. The flask was heated for about 2 hours to insure complete oxidation of the Leuco form of the dye to the fully developed form, believed to be of the formula

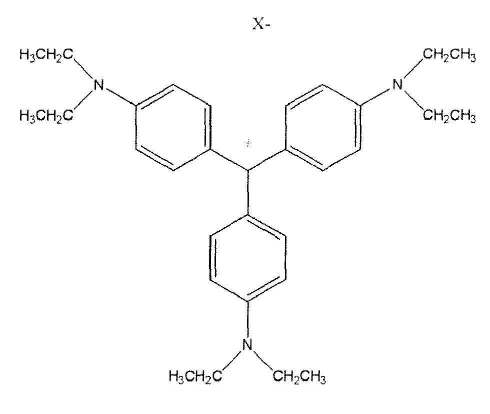

### Example 4

### Part C: Formation of the Carbinol Form of the Basic Dye

After the reaction mixture had been fully oxidized, as outlined in Example 4, Part B, the pH was made alkaline with 40 % NaOH. The blue color immediately disappeared indicating the formation of the carbinol form of the dye. Heating and stirring was continued for 5 additional minutes. The crude product was poured into a 1000 milliliter beaker containing 150 milliliters of water and 2.5 grams of 40% NaOH and allowed to set overnight. The solids were collected by filtration and placed in a sealed container (approx 22.4 grams of carbinol violet dye obtained). The carbinol form of the dye is believed to be of the formula

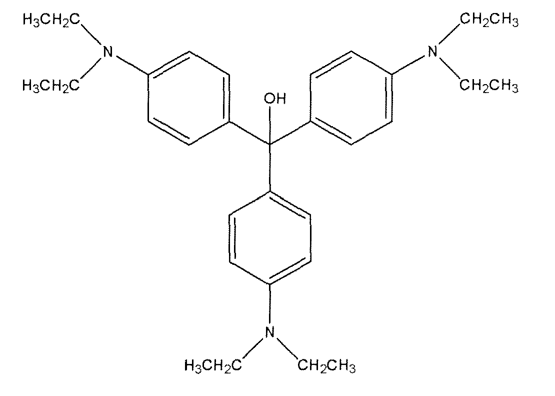

### Example 4

### Part D: Formation of the Final Dye With a Wax Solubilizing Counter-Ion

About 5.22 grams of the carbinol form of the dye from Example 4, Part C, about 3.6 grams of the free acid form of DDBSA (dodecyl benzene sulfonic acid) believed to be of the formula

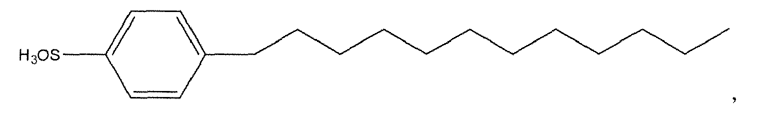

and about 300 milliliters of ethanol is added to a 500 milliliter beaker equipped with a Teflon® coated magnet, condenser and oil bath. The mixture is stirred and heated in a 100 °C oil bath until all of the ethanol and water boils off leaving a violet solid comprising the final dye with a wax solubilizing counter DDBSA counter-ion believed to be of the formula

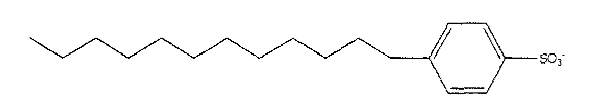

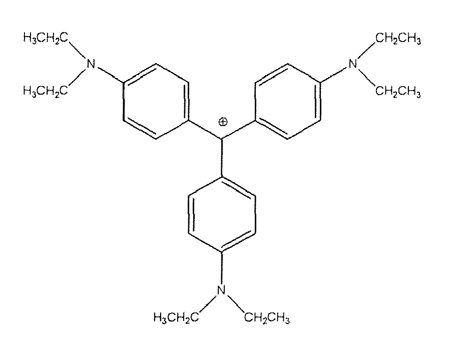

### Example 5

### Preparation of an Ink Base

An ink base was prepared by melting, admixing, and filtering the following ingredients:

43.59 parts by weight polyethylene wax (PE 655®, obtained from Baker Petrolite) of the formula CH₃(CH₂)₅₀CH₃);

19.08 parts by weight stearyl stearamide wax (KEMAMIDE® S-180, obtained from Crompton Corporation);

18.94 parts by weight tetra-amide resin obtained from the reaction of one equivalent of a C-36 dimer acid (obtained from Uniqema, New Castle, DE) with two equivalents of ethylene diamine and UNICID® 700 (obtained from Baker Petrolite), a long chain hydrocarbon having a terminal carboxylic acid group, prepared as described in Example 1 of U. S. Patent 6,174, 937, which is hereby incorporated by reference herein in its entirety;

11.71 parts by weight urethane resin obtained from the reaction of two equivalents of ABITOL® E hydroabietyl alcohol (obtained from Hercules Inc.) and one equivalent of isophorone diisocyanate, prepared as described in Example 1 of U.S. Patent 5,782,966, which is hereby incorporated by reference herein;

6.48 parts by weight urethane resin that is the adduct of three equivalents of stearyl isocyanate and a glycerol-based alcohol, prepared as described in Example 4 of U. S. Patent 6,309,453, which is hereby incorporated by reference herein in its entirety;

0.20 parts by weight NAUGUARD® 445 antioxidant (obtained from Uniroyal Chemical Co.).

Thereafter, 600 grams of the ink carrier components as listed above in the percentages as listed above were added to a 1 liter beaker and heated in an oven at 135 °C until molten. Subsequently, the beaker was inserted into a heating mantle set to 135 °C and the contents of the beaker were stirred for 45 minutes. The resulting ink was then filtered through a combination of Whatman #3 and 0.2 micron NAE filters and placed in a Mott filter assembly. Filtration was supported by the addition of 1 percent by weight FILTER-AID obtained from Fluka Chemika, Switzerland, and proceeded at a temperature of 135 °C until complete after 6 hours. The ink base was poured into molds containing about 31 grams of the colorless ink base and allowed to cool.

### Example 6

### Preparation of Ink Containing Colorant

About 30.5 grams of ink base from Example 5 was placed in a 100 milliliter beaker with a magnetic stir bar and subsequently placed in a 135 °C oil bath until molten. About 0.8 grams of the dye product of Example 1, Part D was then added and stirred for about 3 hours. The blue colored ink was then poured into an aluminum mold.

### Example 7

### Preparation of Ink Containing Colorant

About 30.0 grams of ink base from Example 5 was placed in a 100 milliliter beaker with a magnetic stir bar and subsequently placed in a 135 °C oil bath until molten. About 1.65 grams of the dye product of Example 2, Part D was then added and stirred for about 3 hours. The blue colored ink was then poured into an aluminum mold.

### Example 8

### Preparation of Ink Containing Colorant

About 30.0 grams of ink base from Example 5 was placed in a 100 milliliter beaker with a magnetic stir bar and subsequently placed in a 135 °C oil bath until molten. About 1.65 grams of the dye product of Example 1, Part E was then added and stirred for about 3 hours. The dye did not dissolve in the ink base. The ink base with dye was then poured into an aluminum mold. Dye was observed on the bottom of the beaker.

### Example 9

### Preparation of Ink Containing Colorant

About 30.6 grams of ink base from Example 4 was placed in a 100 milliliter beaker with a magnetic stir bar and subsequently placed in a 135 °C oil bath until molten. About 1.7 grams of the dye product of Example 3, Part D was then added and stirred for about 3 hours. The blue colored ink was then poured into an aluminum mold.

### Example 10

### Printing of Ink Samples Containing Colorant

Printed samples of the inks prepared in Examples 6 through 9 were generated on HAMMERMILL LASERPRINT® paper using a K Printing Proofer (manufactured by RK Print Coat Instrument Ltd., Litlington, Royston, Heris, SG8 0OZ, U.K.). In this method, the tested inks were melted onto a printing plate set at 150°C. A roller bar fitted with the paper was then rolled over the plate containing the melted ink on its surface. The ink on the paper was cooled, resulting in three separated images of rectangular blocks (three different intensities of ink coverage on the paper). The most intensely colored block contained the most ink deposited on the paper, and was therefore used to obtain the color value measurements. The print samples were evaluated visually.

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims. Unless specifically recited in a claim, steps or components of claims should not be implied or imported from the specification or any other claims as to any particular order, number, position, size, shape, angle, color, or material.

## Claims

1. A phase change ink composition comprising:
a phase change ink carrier; and
a colorant compound comprising a basic dye component and a waxy counter ion comprising a waxy moiety.

2. A phase change ink composition according to claim 1, wherein the phase change ink carrier comprises one or more amides, and one or more isocyanate-derived materials, or a mixture of one or more amides and one or more isocyanate-derived materials.

3. A phase change ink composition according to claim 1, wherein the waxy counter ion is a compound of the formula
R₂₀-(An)_{q}
wherein q is an integer which is 1, 2, 3, 4, 5, or 6, each An, independently of the others, is a carboxylic acid group, a carboxylate group, an organosulfate group, an organosulfonate group, an organosulfinate group, or an organophosphate group; and
wherein R₂₀ is an alkyl group, an alkylene group, an aryl group, an arylene group, an arylalkyl group, an arylalkylene group, an alkylaryl group, or an alkylarylene group.

4. A phase change ink composition according to claim 1, wherein the waxy counter ion is a compound of the formula
A₁₁-R₂₁-A₂₂
wherein A₁₁ and A₂₂ each, independently of the other, are anionic groups;
wherein R₂₁ is an alkylene group, an arylene group, an arylalkylene group, or an alkylarylene group.

5. A phase change ink composition comprising:
a phase change ink carrier; and
a colorant compound of the formula 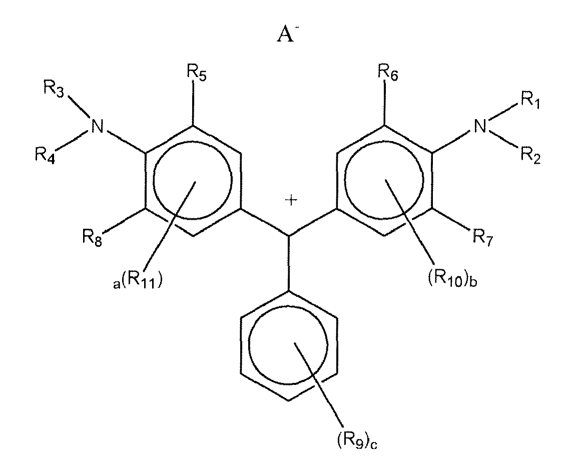
wherein R₁, R₂, R₃, and R₄, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅ and R₆ can be joined together to form a ring, wherein R₅, R₆, R₇, and R₈, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅ and R₆ can be joined together to form a ring, and wherein R₁, R₂, R₃, R₄, R₅, and R₆ can each be joined to a phenyl ring in the central structure, wherein R₉, R₁₀, and R₁₁, are each independently of the others optionally included and wherein if included each R₉, R₁₀, and R₁₁, independently of the others, is (i) a hydroxy group, (ii) a halogen atom, (iii) an amine group, (iv) an imine group, (v) an ammonium group, (vi) a cyano group, (vii) a pyridine group, (viii) a pyridinium group, (ix) an ether group, (x) an aldehyde group, (xi) a ketone group, (xii) an ester group, (xiii) an amide group, (xiv) a carbonyl group, (xv) a thiocarbonyl group, (xvi) a sulfoxide group, (xvii) a nitrile group, (xviii) a mercapto group, (xix) a nitro group, (xx) a nitroso group, (xxi) a sulfone group, (xxii) an acyl group, (xxiii) an acid anhydride group, (xxiv) an azide group, (xxv) an azo group, (xxvi) a cyanato group, (xxvii) an isocyanato group, (xxviii) a thiocyanato group, (xxix) an isothiocyanato group, (xxx) a urethane group, (xxxi) a urea group, or a mixture or combination thereof, wherein two or more substituents can be joined together to form a ring, wherein R₉, R₁₀, and R₁₁ can each be joined to a phenyl ring in the central structure;
wherein a, b and c each, independently of the others, is an integer which is 0, 1, 2, or 3; and
wherein A- is the waxy counter ion.

6. A phase change ink composition according to claim 1, having a colorant of the formula

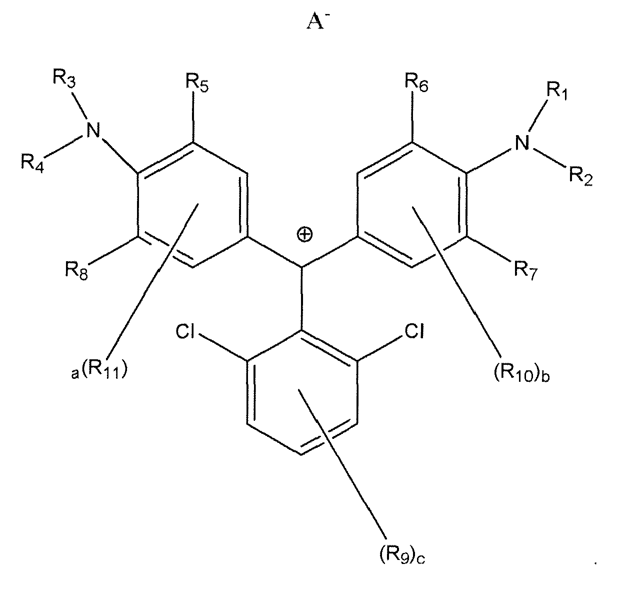

7. A phase change ink composition according to claim 1, having a colorant of the formula

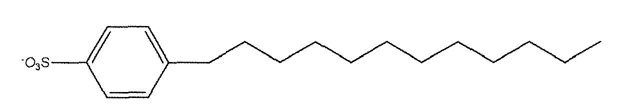

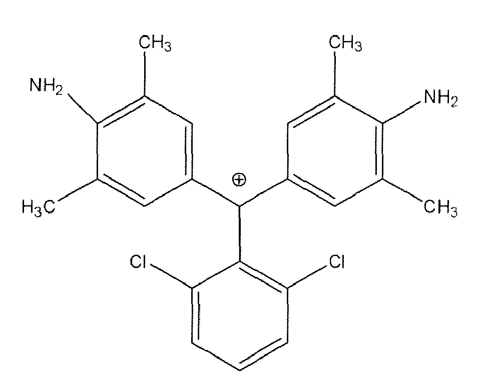

8. A phase change ink composition according to claim 1, having a colorant of the formula

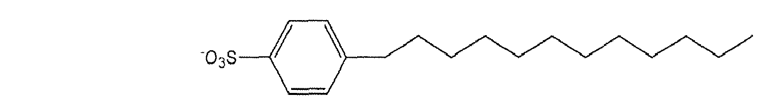

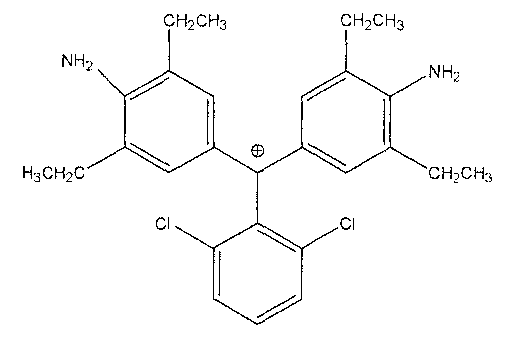

9. A phase change ink composition according to claim 1, having a colorant of the formula

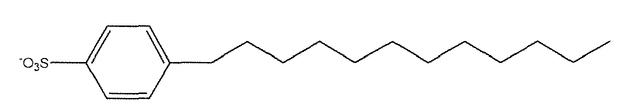

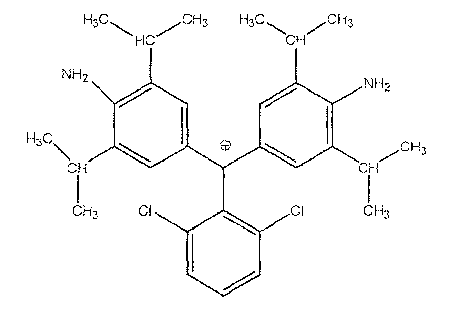

10. A process which comprises (1) incorporating into an ink jet printing apparatus a phase change ink composition comprising a phase change ink carrier and a colorant compound of the formula 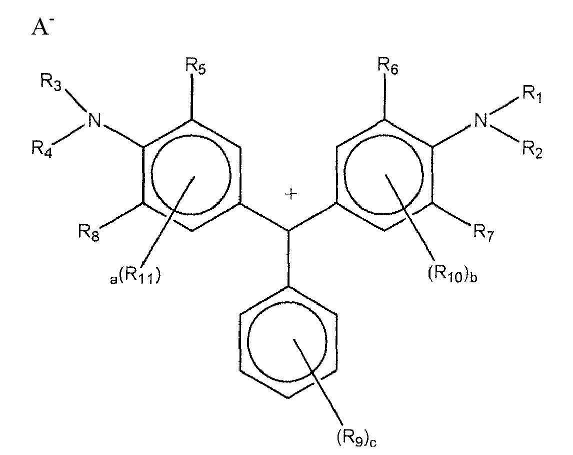 wherein R₁, R₂, R₃, and R₄, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅ and R₆ can be joined together to form a ring, wherein R₅, R₆, R₇, and R₈, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅ and R₆ can be joined together to form a ring, and wherein R₁, R₂, R₃, R₄, R₅, and R₆ can each be joined to a phenyl ring in the central structure, wherein R₉, R₁₀, and R₁₁, are each independently of the others optionally included and wherein if included each R₉, R₁₀, and R₁₁, independently of the others, is (i) a hydroxy group, (ii) a halogen atom, (iii) an amine group, (iv) an imine group, (v) an ammonium group, (vi) a cyano group, (vii) a pyridine group, (viii) a pyridinium group, (ix) an ether group, (x) an aldehyde group, (xi) a ketone group, (xii) an ester group, (xiii) an amide group, (xiv) a carbonyl group, (xv) a thiocarbonyl group, (xvi) a sulfoxide group, (xvii) a nitrile group, (xviii) a mercapto group, (xix) a nitro group, (xx) a nitroso group, (xxi) a sulfone group, (xxii) an acyl group, (xxiii) an acid anhydride group, (xxiv) an azide group, (xxv) an azo group, (xxvi) a cyanato group, (xxvii) an isocyanato group, (xxviii) a thiocyanato group, (xxix) an isothiocyanato group, (xxx) a urethane group, (xxxi) a urea group, or a mixture or combination thereof, wherein two or more substituents can be joined together to form a ring, wherein R₉, R₁₀, and R₁₁ can each be joined to a phenyl ring in the central structure;
wherein a, b and c each, independently of the others, is an integer which is 0, 1, 2, or 3; and
wherein A⁻ is the waxy counter ion;
(2) melting the ink; and
(3) causing droplets of the melted ink to be ejected in an imagewise pattern onto a substrate.
